Europäisches Patentamt

European Patent Office

Office européen des brevets

(19)

(11) Publication number:  **0 319 233 B1**

(12) **EUROPEAN PATENT SPECIFICATION**

(45) Date of publication of patent specification: **22.07.92**  (51) Int. Cl.5: **F16D 23/06**

(21) Application number: **88311269.0**

(22) Date of filing: **28.11.88**

(54) **Synchronizing clutch assembly.**

(30) Priority: **27.11.87 JP 299148/87**

(43) Date of publication of application:
**07.06.89 Bulletin  89/23**

(45) Publication of the grant of the patent:
**22.07.92 Bulletin  92/30**

(84) Designated Contracting States:
**DE FR GB IT SE**

(56) References cited:
| | |
|---|---|
| **EP-A- 0 292 319** | **DE-A- 1 600 240** |
| **DE-A- 1 755 457** | **DE-A- 1 815 372** |
| **DE-B- 1 259 210** | **DE-B- 2 006 984** |
| **DE-C- 3 637 327** | **FR-A- 1 012 482** |
| **FR-A- 2 221 979** | **GB-A- 1 137 332** |

(73) Proprietor: **KANZAKI KOKYUKOKI MFG. CO., LTD.**
**18-1, 2-chome Inadera**
**Amagasaki(JP)**

(72) Inventor: **Ohtsuki, Kazuhiko**
**2-17-22, Maintani**
**Takarzuka(JP)**
Inventor: **Yoshii, Gen**
**3-18, 2-home Mukonoso-Honmachi**
**Amagasaki(JP)**
Inventor: **Okanishi, Toshiaki**
**3-14, 2-chome Tozaki-dori**
**Nagata-ku Kobe(JP)**

(74) Representative: **Valentine, Francis Anthony Brinsley et al**
**REDDIE & GROSE 16 Theobalds Road**
**London WC1X 8PL(GB)**

EP 0 319 233 B1

## Description

This invention relates to a synchronizing clutch assembly of the inertia lock- and key-type synchronizer clutch widely used in vehicles and which has a servo effect, the assembly being suitably for use in marine reversing gear for boats such as yachts, for boats, and fishing boats and also for use in speed-change transmission for vehicles such as tractors and automobiles.

A synchronizing clutch in a marine reversing gear is used for the purpose of selectively coupling a forward direction gear wheel and a reverse direction gear wheel, which are both rotatably mounted on an output shaft and are driven to rotate constantly by an engine, to the output shaft which carries a propeller having a large inertial mass. Because of the large inertial mass carried by an output shaft, a cone clutch or a friction clutch of multi-disk type widely used in marine reversing gearing tends to have a relatively short life due to wearing of its clutch surfaces under conditions of use such that a boat needs to be repeatedly moved forwardly and backwardly to follow fish in shoals or such that the propeller is rotationally driven frequently in a low speed range where the variations in torque are large.

In automobiles, an inertia lock-type synchronizer clutch is generally employed as a synchronizer clutch overcoming the drawbacks of a selective-gear type or constant-mesh type speed-change transmission that a difference between the circumferential speed of a shift gear wheel or coupler sleeve and that of a cooperating gear wheel will cause a shock, when they are meshed or engaged with each other, which in turn may cause noise, damage and wear to the gear wheels. As an inertia lock-type synchronizer clutch for automobiles, the key-type (Borg Warner-type) clutch is generally employed. In special automobiles, such as sports cars, of the type which requires quick speed-changing under high speed conditions, the Porsche-type clutch is employed which is an inertia lock-type clutch having a servo effect.

A key-type synchronizing clutch assembly is known for example from GB-A-1,137,332 and comprises a transmission shaft; a drive gear having an integral splined ring mounted rotatably on the transmission shaft, the splined ring having an internal conical first clutch surface; a hub member fixedly mounted on the transmission shaft and having external first splines shaft; an axially shiftable sleeve member having internal second splines engageable with the splined ring, the sleeve member being slidably but non-rotationally mounted on the hub member by engagement between the first and second splines; a synchronizer ring having an external conical second clutch surface, engageable frictionally with the first clutch surface, and third external splines with which the second splines may be meshed, the hub member having reduced-diameter end portion on which said synchronizer ring is slidably mounted; and a key member slidable in an axial groove in the outer circumference of the said hub member, and capable of pushing the synchronizer ring into frictional engagement with the splined ring via the first and second clutch surfaces the key member having an external projection, receivable in an annular recess formed in the interior of the sleeve member, and being biased radially outwardly of said hub member so as to engage yieldably by means of the projection with said sleeve member so that when the sleeve member is shifted from a neutral position towards the splined ring the key member is moved towards the synchronizer ring.

In operation, the key member is displaced by means of the synchronizer sleeve, towards the synchronizer ring so as to thrust the latter against the associated wheel to cause frictional engagement between the cone-shaped clutch surfaces of the synchronizer ring and gear wheel. Synchronous rotation is attained during a period in which displacement of the synchronizer sleeve towards the gear wheel is restrained by an engagement of tapered end faces of splines on the outer circumference of the synchronizer ring. After the synchronous rotation of the sleeve and hub with the gear wheel has been attained, the synchronizer sleeve is displaced over the synchronizer ring so as to mesh splines of the sleeve with the gear wheel or splines thereof. It is thus seen that the key-type synchronizer clutch comprises a relatively small number of elements and the moveable members thereof perform almost only sliding movements so that the clutch operates in a reliable manner and has a large durability.

However, in cases where a large amount of energy has to be absorbed during a synchronizing process, even such key-type synchronizer clutches require a large operating force and a prolonged time for synchronizing and are apt to generate noise. A large synchronizing capacity being capable of absorbing a large amount of energy will enlarge the size of the clutch. In the case of marine reversing gearing, it is difficult even by use of a large-scale clutch to absorb a large amount of energy at the time when a propeller having a large inertial mass becomes rotated by a gear which is constantly rotationally driven by the engine.

As is well known, the Porsche-type synchronizer clutch employs a split resilient synchronizer ring having a gap between it's ends. This synchronizer ring is compressed by a shifting operation of the synchronizer sleeve so that a frictional force is generated between mating surfaces of the sleeve and ring by the spring action of the synchronizer ring. This frictional force is transmitted successively to a thrust block received in the gap in the synchronizer ring, a semi-circular, resilient brake band disposed in proximity to the inner surface of synchronizer ring, and a tiltable anchor block received in a recess, which is formed in the outer circumference of a boss portion of the clutch, and the synchronizing force is multiplied during such transmitting process. A large thrusting force pressing the synchroniser ring to move towards the associated gear wheel is caused spontaneously so that synchronized rotation is achieved under a servo action or effect. It is thus seen that the required synchronous rotation is attained quickly even under high speed conditions of the vehicle.

On the other hand, a Porsche-type clutch comprises a relatively large number of elements and the moveable members thereof perform complicated movements so that it is expensive and involves a problem with regard to maintenance. Either of the driving and driven sides of the synchronizer clutch employed in a speed-change transmission for a vehicle may have a rotational speed higher than that of the other side before a speed-change operation which is performed under a condition where a main clutch employs two of the semi-circular brake bands referred to above so that either of them may participate in generating a braking torque. Consequently, only half the total areas of the clutch surfaces participate in the servo action so that synchronizing capacity of the clutch is limited in itself.

Accordingly, the present invention proposes to provide a synchronizing clutch assembly which has the basic structure of an inertia lock- and key-type synchronizer clutch, which has been proved to be reliable in operation and of great durability, and in which a servo action is achieved over the whole area of conical clutch surfaces of the clutch and, nevertheless, any unintended engagement of the clutch is prevented with certainty while also the clutch-disengaging operation is assured with certainty.

A synchronizing clutch assembly according to the invention is characterised in that: a cam means acts between opposed end face of the synchronizer ring and said hub member in response to initial rotational displacement of the synchronizer ring relative to said hub member under initial frictional engagement between said first and second clutch surfaces, to increase the frictional engagement of the synchronizer ring with the hub member and to force said synchronizer ring to move towards the splined ring;

in that a stopper means is provided on the outer circumference of said synchronizer ring to engage the key member so as to prevent rotational displacement of the synchronizer ring when the sleeve member is in its neutral position, whereas when the key member is displaced from a neutral position thereof towards the splined ring by a predetermined small amount, the stopper means is released from engagement with said the member through a recess in the key member so as to permit rotational displacement of said synchronizer ring; and

in that a ramp surface is formed on that inner end face of the recess of said key member which is positioned nearer to the splined ring, such that when the key member is displaced axially away from the splined ring when the stopper means is located within the recess, the said ramp surface pushes the stopper means so as to rotate the synchronizer ring in the direction to move the synchronizer ring in the direction to move the stopper means out of the recess of the key member.

The invention will now be described in more detail, by way of example with reference to the drawings, in which:-

FIG. 1 is a sectional side view of a marine reversing gear in which a first embodiment of the synchronizer clutch assembly according to the present invention is employed;

FIG. 2 shows a protion of Fig. 1 on an enlarged scale;

FIG. 3 is a longitudinal sectional view of a part of a clutch mechanism shown in FIG. 2 in a plane different from that shown in FIG. 2;

FIG. 4 is a cross-sectional view taken along line IV-IV of FIG. 2;

FIG. 5 is a perspective exploded view showing various members of the clutch mechanism shown in FIG. 2;

FIG. 6 is a perspective view, partially in section, of a part of the clutch mechanism shown in FIG. 2;

FIG. 7 is a perspective exploded view, partially in section, showing a part of the clutch mechanism shown in FIG. 2 on an enlarged scale;

FIG. 8 is view, similar to FIG. 7 but with the clutch mechanism in an assembled state;

FIG. 9 is a view, similar to FIG. 8 but showing a condition different from that shown in FIG. 8;

FIGS. 10 (a) to 10 (k) are diagrams showing successive stages in the operation of the mechanism shown in Figs. 1 to 9 the upper part of each of these diagrams depicts half a longitudinal section of the clutch mechanism whereas the lower part of these diagrams shows a development of a section on an imaginary cylindrical surface, of the part of clutch mechanism shown in the upper part thereof;

FIGS. 11A and 11B are sectional side views of part of the tractor transmission in which a second embodiment of the present invention is employed;

FIG. 12 is a view similar to Fig 7, of part of a clutch mechanism shown in Fig. 11B;

FIGS. 13(a) to 13(k) are diagrams similar to FIGS. 108A9 to 10(k) but relating to the clutch mechanism shown in FIGS 11 and 12.

FIG. 14(b) to 14(k) are further diagrams relating to operation of this second embodiment, similar to the lower parts of FIGS. 13 (a) to 13(k);

FIG. 15(a), (b) and (c) and FIGS. 16(a), (b) and (c) are sectional views, showing respectively two alternative forms of a cam means employed in the second embodiment shown FIGS. 11 to 14; and

FIG.17 is a sectional side view similar to FIG.2 but showing an alternative from of return spring means shown in FIG.2

The present invention permits a synchronizing clutch assembly to have a large synchronizing capacity owing to a servo action over the whole area of the conical clutch surfaces 29 and 36 of the splined ring 28 and synchronizer ring 35. Synchronised rotation may be attained with a relatively small operating force, in a relatively short time, without causing any substantial noise. In contrast to the conventional cone clutch widely used in marine reversing gears, the conical clutch surfaces 29 and 36 of a clutch assembly according to the present invention are used only for a rotation-synchronizing purpose so that wear of the clutch surfaces is much reduced as compared to the conventional cone clutch. Even when some wear of such clutch surfaces has been caused, some additional time is merely required for a clutch-engaging process and no problem is caused in transmission of torque which is made under a condition where splines of the sleeve member 33 are engaged with splined ring 28.

Nevertheless, unintended engagement of the clutch mechanism from the neutral condition is prevented with certainty by cooperation between the key member 39 and the stopper means 48, 49 of the synchronizer ring 35. Further, although re-engagement between the clutch surfaces 29 and 36 may occur during a clutch-disengaging process, a clutch-disengaging operation is assured, even when such re-engagement has occurred, by the ramp surface 51 or 51A of the key member 39. It is thus seen that problems arising from the servo action or effect are successfully solved in assemblies according to the present invention.

The synchronizing clutch assembly according to the present invention has the basic structure of the inertia lock- and key-type synchronizer clutch which has been proved to be reliable in operation and large durability. Starting from such basic structure, the present invention provides cam means between the synchronizer ring 35 and hub member 31, for achieving a servo action, and some additional elements for the key member 39 and synchronizer ring 35 for solving two problems arising from the servo action. Consequently, the present invention provides successfully a clutch assembly which has virtually all the advantages of the conventional key-type synchronizer clutch. That is, the clutch assembly according to the present invention is simple in the structure and may be manufactured with a low cost, operates in a reliable manner, and has a large durability.

In the case of a double-acting clutch assembly, it is preferred that the key member 39 is formed with a T-shaped configuration including a depending leg portion, which extends from an axial mid portion of the key member radially inwardly of the hub member 31, and a pair of axial extensions which extend towards the synchronizer rings 35. Both axial end faces of the leg portion set forth above are utilized as a pair of thrust surfaces 59 for pushing the synchronizer rings 35 of the respective sides. Each of the recesses 50 for permitting rotational displacement of each synchronizer ring 35 is formed in an inner surface of each of the axial extensions set forth above.

With key member structure referred to above, the key member may be received stably by means of its leg portion thereof in the key-receiving groove 38 of the hub member 31. Each of the thrust surfaces 59 set forth above acts directly upon an end face of the cooperating synchronizer ring 35 so that no additional projection to be engaged by the key member is required on the outer surface of synchronizer ring 35. Consequently, positioning of the two projections 48 and 49 on the outer surface of the synchronizer ring 35 relative to the recess 50 of key member 39 may be effected with ease. Further, axial length of the key member 39 may be secured with ease so that it remains at an end portion thereof between projections 48 and 49 of the synchronizer ring 35 of ine side even when the key member is displaced maximumly towards the other side.

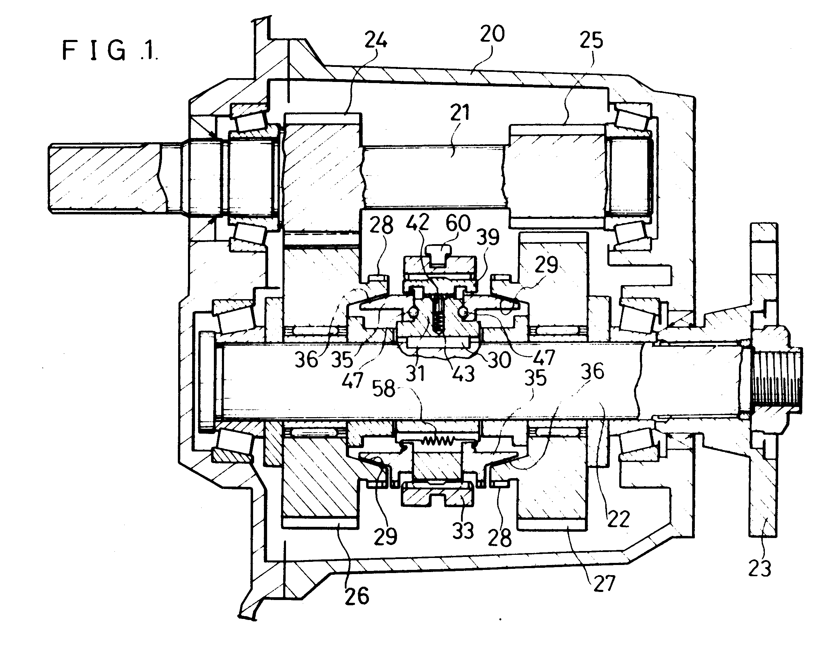

FIGS 1 to 10 show a first preferred embodiment of the present invention which is employed in a marine reversing gear shown in FIG. 1.

In FIG, 1, numeral 20 designates a gear casing which is mounted in a stern portion of a boat not shown such as a yacht, motor boat or fishing boat. In the casing 20 is journalled an input shaft 21, extending forwardly from the casing, and an output shaft 22 extending rearwardly from the casing. The input shaft 21 in connected at its front end to an engine fly-wheel through a damper coupling ( both not shown), whereas the output shaft 22 is connected at its rear end to a propeller shaft ( not shown ) through a coupling which includes a coupling half 23.

Within the gear casing 20, the input shaft 21 carries thereon an integral forward direction gear wheel 24 and a reverse direction gear wheel 25 which are spaced apart axially of the shaft 21. On the output shaft 22 are rotatably mounted through bearing means a larger forward gear wheel 26, meshing with the gear 24, and a larger reverse gear 27 meshing with an intermediate gear wheel ( not shown ) which in turn meshes with the smaller reverse direction gear wheel 25 on the input shaft. Consequently, each of these gear wheels 26 and 27 on the output shaft constitutes a drive gear which drives the shaft 22 to rotate when coupled to such shaft.

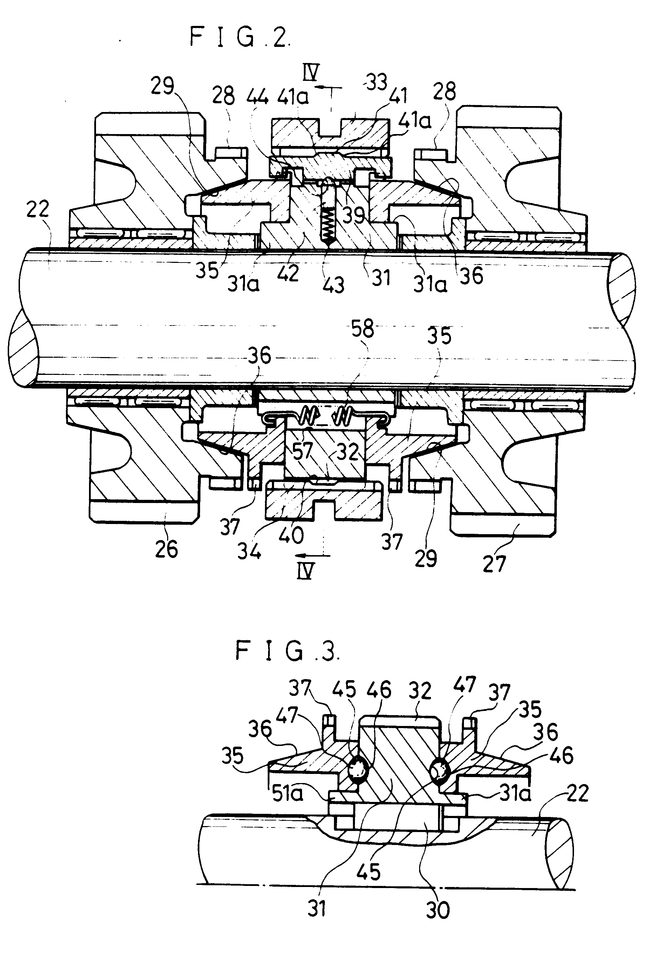

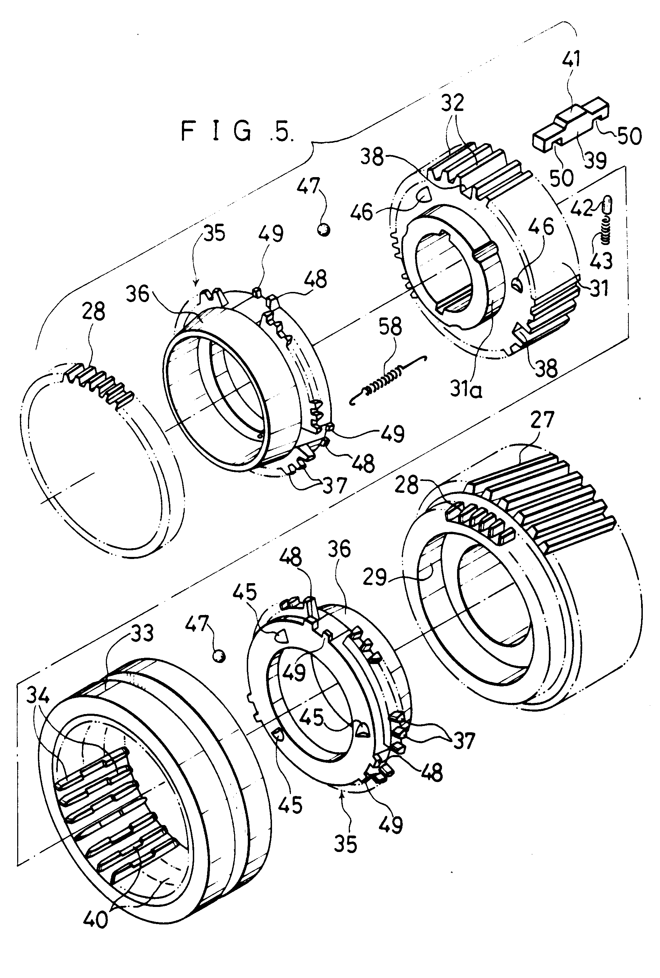

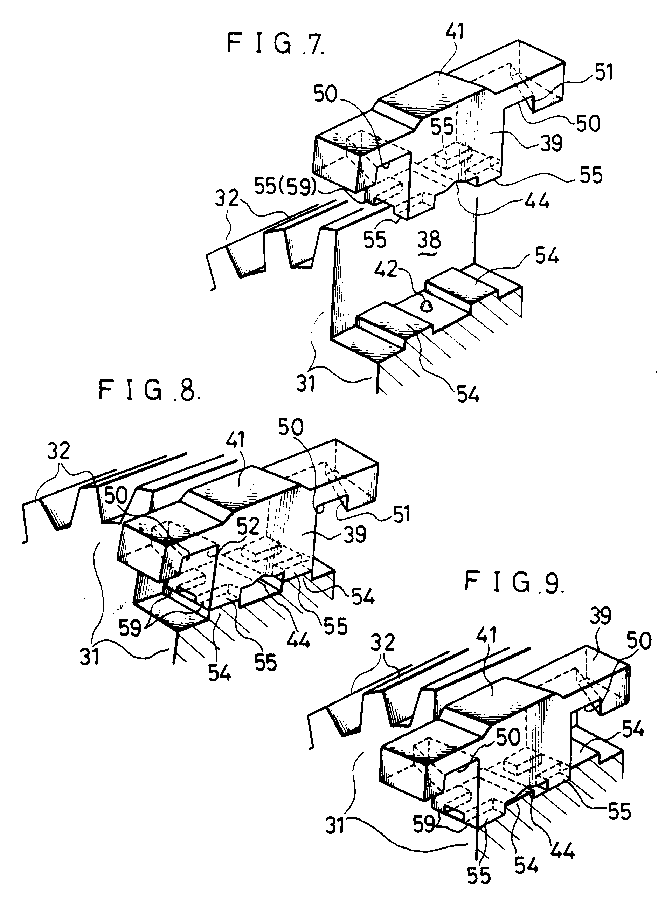

As shown in FIGS. 1 and 2, each of such drive gears 26 and 27 is formed with an integral splined ring 28 having a smaller diameter and a smaller axial width. Each of these splined rings 28 has at the inner circumference thereof a conical first clutch surface 29. As shown in FIGS. 1 to 4, a hub member 31 is disposed at a mid location between the gears 26 and 27 and is fixedly mounted on the output shaft 22 using a pair of keys 30. This hub member 31 has at its outer circumference splines 31, as shown in FIGS. 5 to 9. On the hub member 31 is slidably mounted an axially shiftable sleeve member 33 having at its inner circumference splines 34 ( see FIGS. 5 and 6 ) which may be engaged with each of the splined rings 28. Sleeve member 33 is connected non-rotatably to the hub member 31 by engagement between splines 32 and 34. The hub member 31 includes a pair of reduced-diameter end portions 31a on which a pair of synchronizer rings 35 are slidably mounted. Each of these rings 35 has at it's outer circumference a second conical clutch surface 36, which may be engaged frictionally with the first clutch surface 29 of each splined ring 28, and splines 37 with which splines 34 of the sleeve member 33 may be meshed. In the outer circumference of the hub member 31 are formed three circumferentially spaced axial grooves 38 in which respective key members 39 are slidably received. Elements of the clutch assembly are illustrated somewhat schematically in FIG. 5 in an exploded condition.

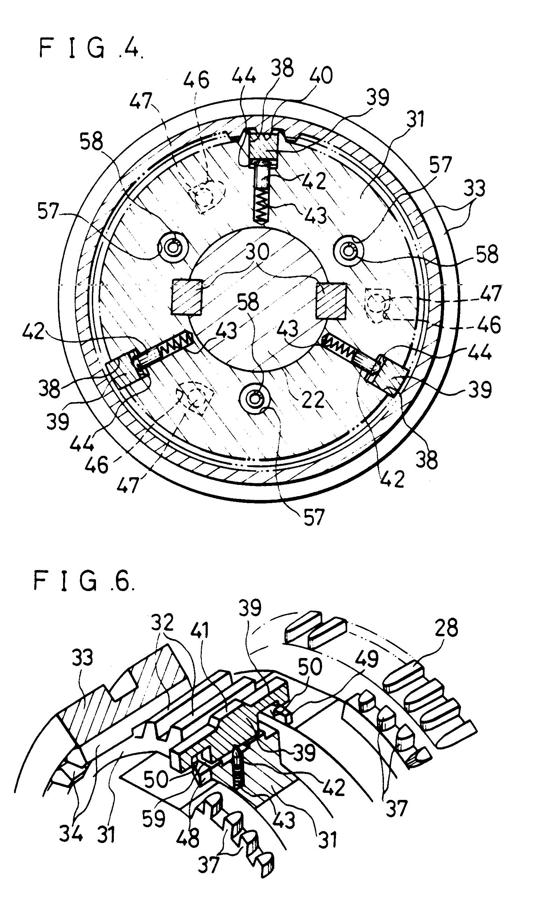

As shown in FIG. 2 and in FIGS. 4 and 5, an annular recess 40 is formed in an axially central region of the inner circumference of the sleeve member 33 by reducing the height of the splines 34 by a suitable amount. On a central region of the outer surface of each key member 39 is formed an integral projection 41 which may be received in the annular recess 40 of sleeve member. The hub member 31 has three radial bores, each opening into an axial groove 38, in which three latch pins 42 are slidably received. Each of these latch pins 42 is biased by a spring 43 to move radially outwardly so as to project into a notch 44 in the inner surface of the associated member 39 in the neutral position of such key member shown in FIG. 2 for latching the key members 39 and sleeve member 33 in their neutral positions. It is arranged that, even under conditions where each latch pin 42 is out of its notch 44, each member 39 is biased to move radially outwardly by each spring 43 through the pin 42 which engages the inner surface of key member 39. Consequently, the projection 41 of such key member 39 is received in the annular recess 40 under bias of the spring 43 so that the key member 39 is engaged non-slidably with the sleeve member 33. The projection 41 will move out of the annular recess 40 when the sleeve member 33 is shifted rally towards a splined ring 28 when the key member 39 is restrained from sliding movement towards the splined ring 28. Both of the axial end faces of annular recess 40 and projection 41 are tapered, as shown in FIG. 2 by numeral 41a with respect to those of the projection 41, so as to assure easy movement of the projection 41 out of and so as to assure easy re-entry of the projection 41 into the recess 40 when the sleeve member 33 id shifted axially away from a splined ring 28 under a condition in which the key member 39 is restrained from sliding movement in a direction away from the splined ring 28.

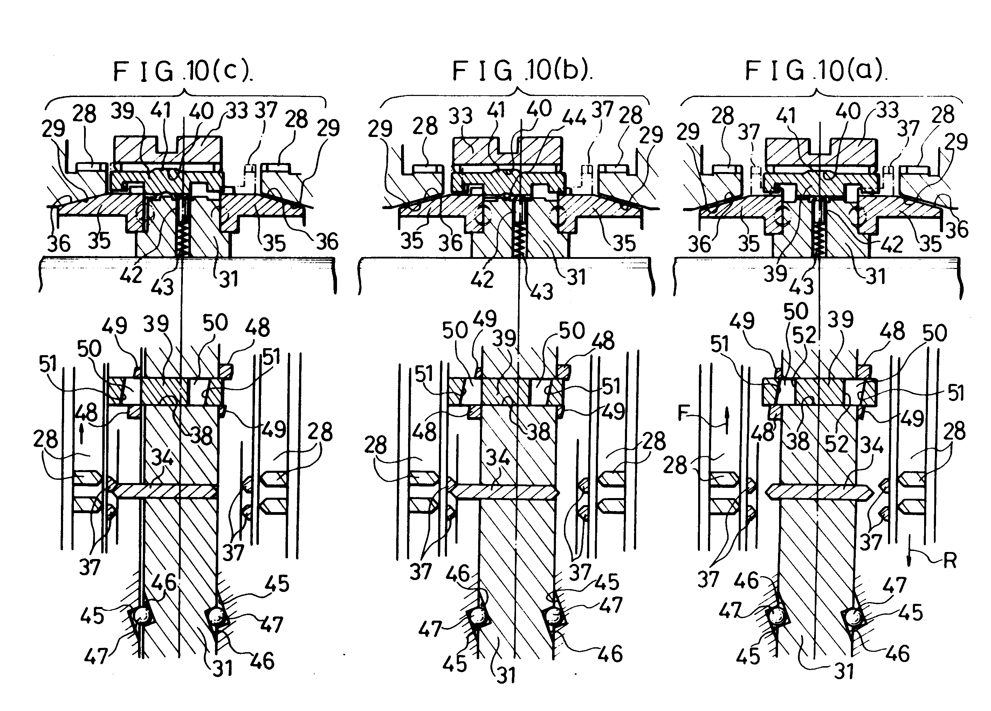

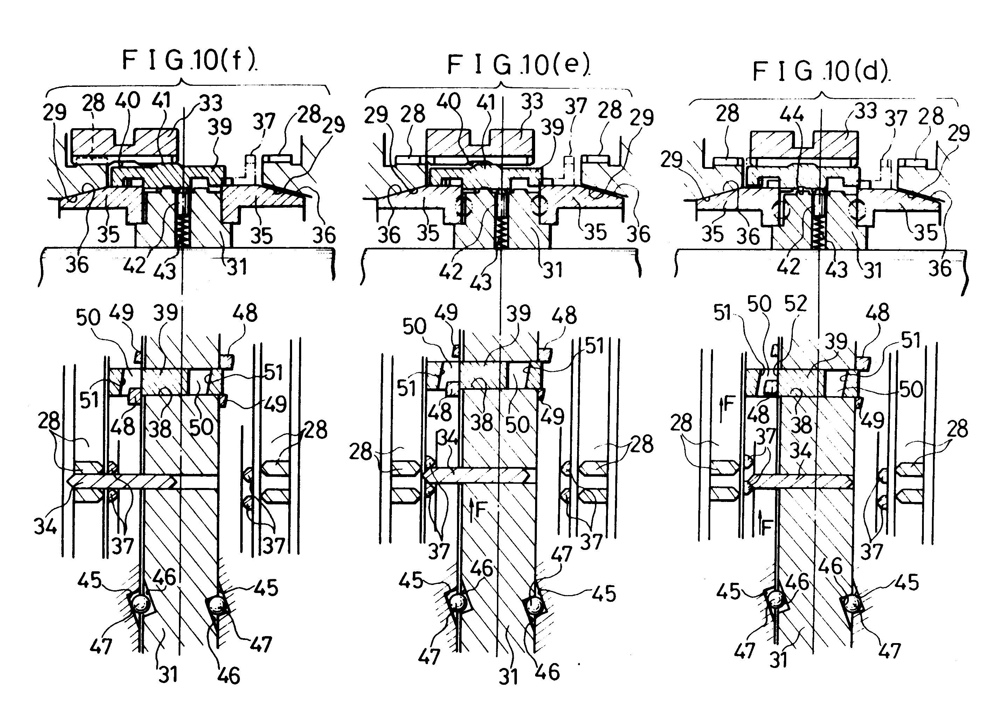

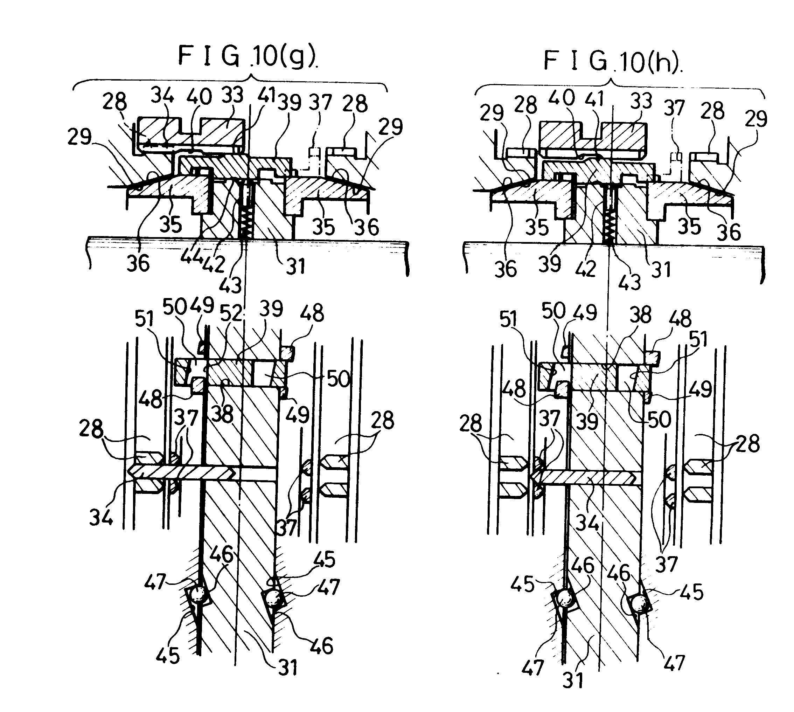

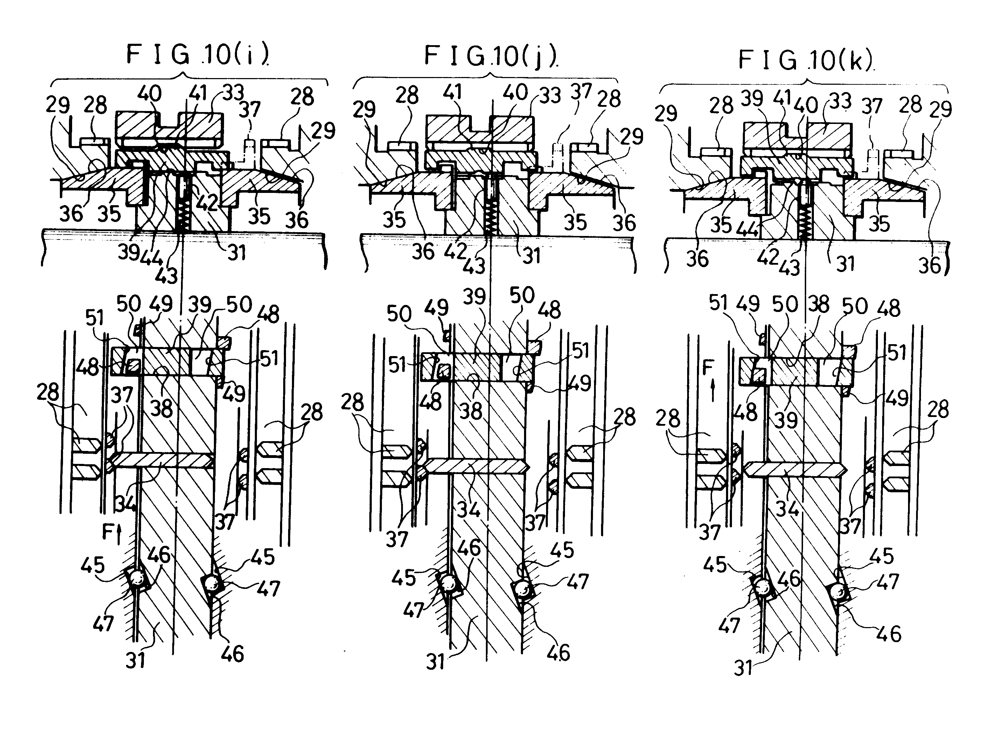

As shown in FIGS. 3 to 5 and in the lower parts of FIGS 10(a)-(k), three pairs of circumferentially-spaced cam grooves having ramp surfaces 45 and 46 are formed in the opposite end faces of synchronizer ring 35 and hub member 31, respectively. The splined ring 28 associated with the forward direction gear wheel 26 has a direction of rotation shown by arrow F in FIG. 10(a), whereas the splined ring 28 associated with the reverse gear wheel 27 has a direction of rotation shown by arrow R in FIG. 10(a). The ramp surfaces 45 and 46 of each pair of the cam grooves are inclined so that, when the synchronizer ring 35 of each side is displaced towards the rotational direction of the splined ring 28 of the same side relative to the hub member 31, the axial spacing between the ramp surfaces 45 and 46 becomes reduced.

As shown in FIG. 5 and in the lower parts of FIGS. 10(a) to 10(k), each synchronizer ring 35 has at its outer circumference three pairs of first and second stopper projections 48 and 49. These projections are disposed such that when the sleeve member 33 is in it's neutral position shown in FIG 10(a), each first projection 48 engages with each key member 39 from the upstream side of the rotational direction of the splined ring 28, whereas each second projection 49 engages with each key member 39 from the downstream side of the rotational direction of the splined ring 28. As shown in FIG. 2 and in FIGS. 6 to 9, each key member 39 has in its inner surface a pair of left and right recesses 50. As shown in the lower side view of FIG. 10(d) with respect to one of the recesses 50, the recess 50 of each side is disposed so that when the key member 39 is displaced axially towards the splined ring 28 of the same side by a predetermined small amount, the first stopper projection 48 may enter the recess 50 so as to permit a rotational displacement of the synchronizer ring 35 towards the rotational direction of the splined ring 28. The recess 50 has first and second axial end faces 51 and 52 between which the first stopper projection 48 is located when such projection entered the recess 50. As shown in FIG. 10(k), the first end face 51 positioned over the splined ring 28 is formed into a ramp surface having an inclination such that, when the key member 39 is displaced axially away from the splined ring 28 in a condition where the projection 48 is located within the recess 50, the ramp surface 51 pushes the stopper projection 48 so as to rotate the synchronizer ring 35 in a direction opposite to the rotational direction of the splined ring 28. The projection 48 includes a chamfered portion on which the ramp surface 51 acts as shown in FIG. 10(f), the axial length of the key member 39 is predetermined relative to axial positions of the stopper projections 48 and 49 on the synchronizer rings 35 of both sides such that, even in a state where one end of the key member 39 takes a position closest to the splined ring 28 of one side, the other end of the key member still remains between the stopper projections 48 an 49 on the synchronizer ring 35 of the other side.

As clearly shown in FIGS. 7 to 9, each axial groove 38 of the hub member 31 has a bottom surface which includes thereon two axially spaced protrusions 54. On the inner surface of each key member 39 are formed at corner portions thereof two pairs of legs 55 which can ride on respective protrusions 54. These protrusions 54 and legs 55 are disposed such that they are in register with each other in the axial direction of the clutch assembly, in the neutral condition of clutch as shown in FIG. 8. When the key member 39 has been moved axially relative to the hub member 31 to a position where the legs 55 have the protrusions 54, the key member 39 is pushed down by the sleeve member 33 radially inwardly in the groove 38 as shown in FIG. 9. The height of each protrusion 54 is predetermined such that, in the condition where the legs 55 ride on the protrusions 54, the key member 39 is kept in a radial position where the projection 41 on the outer surface thereof remains engaged in the annular recess 40 of the sleeve member 33. As can be seen from FIG. 9, each leg 55 has an axial width smaller than the spacing between the two protrusions 54. It is thus seen that in a pushed-down condition of the key member 39, such as shown in FIG. 9, axial displacement of the key member in either direction is prevented by the hub member 31 after the member has been displaced through a distance corresponding to the clearance between one of the protrusions 54 and one of the pairs of legs 55 with resulting engagement of the legs with one of the protrusions. The key member 39 is shaped generally to have a T-Shape including a radially inwardly depending leg portion and a pair of axial arm extensions, which extend towards the synchronizer rings 35, and is designed such that it pushes the synchronizer rings 35 on one side or the other by means of respective axial end faces 59 of the leg portion (hereinafter referred to as "thrust surfaces"). Each of the recesses 50 is formed in the inner surface of each of the axial extensions such that the second axial end face 52 referred to before is continuous with each thrust surface 59.

As shown in FIGS. 2 and 4, the hub member 31 includes three axial thorough bores 57 through which three tension springs 58, having their en hooked to the synchronizer rings 35 on each side, extends. As shown in FIG. 1, a shifter 60 is provided which engages in annular groove in the outer circumference of the sleeve member 33.

As is conventional in a synchronizer clutch, both ends of the splines 34 of the sleeve member 33 and that end of the splines 37 of each synchronizer ring 35, with which one end of the splines 34 of the sleeve member start to engage, are chamfered to be V-Shaped. The teeth or splines of the splined rings 28 similarly shaped at their ends with which splines 34 of the sleeve member start to engage.

The angular position of each synchronizer ring 35 relative to the hub member 31 in the neutral condition of the clutch as shown in FIG. 10(a) is determined by the positioning of the stopper projections 48 and 49 on the synchronizer ring 35 relative to the hub member is predetermined in such a manner the tapered end of each of the splines 37 on the synchronizer ring 35 is in alignment, axially of the clutch mechanism, with a tapered end face of one of the splines the 34 of sleeve member 33 which splines are meshed or engaged with splines 34 of the hub member 31.

FIGS 10(a) to 10(k) are illustrations for explaining operation of the clutch mechanism. In each of these figures, the upper part depicts in longitudinal section a half of the clutch mechanism and the lower part depicts in longitudinal section a half of the clutch mechanism taken along an imaginary cylindrical surface. In the lower part, there are shown for an easier understanding only one of the splines 34 of the sleeve member 33, only two adjacent splines 37, of each synchronizer ring 35, and only two adjacent splines of each splined ring 28, respectively.

FIG. 10(a) shows the neutral condition of the clutch mechanism, while FIG. 10(g) shows the fully engaged condition of left clutch, as viewed in FIG. 10(a) to FIG. 10(k). FIGS. 10(b) to 10(f) illustrate intermediate conditions in the process of clutch-engagement of the clutch from the neutral condition shown in FIG. 10(a) to the engaged condition shown FIG. 10(g), whereas FIGS. 10(h) to 10(k) illustrated intermediate conditions in the process of clutch-disengagement of the left clutch from the engaged condition shown in FIG. 10(g) to the neutral condition shown in FIG. 10(a).

In the neutral condition shown in FIG. 10(a), each key member 39 is located in the position shown in FIG. 8 where the projection 41 thereof is received in the annular recess 41 of the sleeve member 33 and where each latch pin 42 projects into the notch 44 of the key member under the bias of the spring 43.

Each end of the key member 39 is located between the first and second stopper projections 48 and 49 on the respective synchronizer rings 35 on each side, so that each of the synchronizer rings is prevented from rotation relative to the hub member 31. The splined ring associated with the forward direction gear wheel 26 shown in FIG 2 is rotating in the direction of the arrow F, whereas the splined ring 28 associated with the reverse gear wheel 27 shown in FIG. 2 is rotating in the direction of arrow R.

When the sleeve member 33 is shifted by the shifter 60 shown in FIG. 1 from the neutral position shown in FIG. 10(a) towards the left, as viewed in these figures, for the purpose of coupling the forward direction gear 26 to the output shaft 22, the key member 39 (which is engaged non-slidably with the sleeve member by means of the projection 41 received in the annular recess 40) is moved towards the left so that the lefthand recess 50 of the key member is displaced into the position shown in FIG.10(b) where the recess 50 is located between stopper projections 48 and 49 of the left-hand synchronizer ring 35 so as to permit rotation of the ring 35. At this stage, the splines 34 of the sleeve member 33 become engaged at their tapered end faces with the tapered end faces of the splines 37 of the synchronizer ring 35 and the thrust surface 59 (FIGS. 6 to 9) of the key member 39 abuts the synchronizer 35. Although the legs 55 of the key member move out of register with the protrusions 54 on the bottom surface of groove 38, the projection 41 of the key member 39 remains in the annular recess 40 in the sleeve member 33 due to the bias of the spring 43, still acting upon the key member through latch pin 42 which is now out of the notch 44, so that the key member remains engaged non-slidably with sleeve member 33.

Further shifting of the sleeve member 33 from the condition shown in FIG. 10(b) causes a further sliding movement of the thrust surface 59 of the key to move the synchronizer ring 35 towards the left so as to press its second clutch surface 36 against the first clutch surface 29 of the splined ring 28, as shown in FIG. 10(c). At this stage the synchronizer ring 35 becomes spaced towards the left from the hub member 31 so that ball 47 is brought into a floating condition.

As the second clutch surface 36 becomes pressed against the first clutch surface 29, the synchronizer ring 35 is subjected to drag by the rotating splined ring 28, as shown in FIG. 10(d), so that the axial spacing between the bottom ramp surfaces 45 and 46 of the cam grooves becomes reduced. Consequently, the balls 47 ride up these ramp surfaces 45 and 46 to generate an axial component of force on the synchronizer ring 35 towards the splined ring 28. As a result, the engagement between the clutch surfaces 29 and 36 is enhanced so that the torque applied to the synchronizer ring 35 by the splined ring 28 is increased. Consequently, the thrust force applied to the synchronizer ring 35 through the ball 47 and bottom ramp surface 45 is further increased. It is thus seen that engagement contact between the synchronizer ring 35 and the splined ring 28, and thus frictional engagement of the second clutch surface 36 with the first clutch surface 29 will proceed with a self-servo effect.

As a result of the rotation of the synchronizer ring 35 with the rotating splined ring 28 under frictional drag from the condition shown in FIG. 10-(c) into that shown in FIG. 10(d) where the splines 37 of the synchronizer ring which had been located with the upstream sides of their tapered faces in contact with the tapered ends of the splines 34 are now in contact therewith at the downstream sides of their tapered end faces and where the first stopper projection 48 of the synchronizer ring 35 is located within the recess 50 of key member 39.

Until synchronous rotation of the synchronizer ring 35 with the splined ring 28 has been attained by a full engagement of the second clutch surface 36 with the first clutch surface 29, displacement of the sleeve member 33 towards the left is prevented by a torque component which is caused at the mutually engaging tapered end faces of splines 34 and 37 so as to resist against a leftward displacement of the spline 34. Because frictional engagement of the second clutch surface 36 with the first clutch surface 37 proceeds with the self-servo effect set forth above, synchronous rotation of the synchronizer ring 35 due to the full engagement between clutch surfaces 29 and 36 is attained spontaneously and rapidly. The synchronous rotation of the synchronizer ring 35 is transmitted to the hub member 31 through the ball 47 and ramp surfaces 46 so that a synchronized condition is attained where the synchronizer ring 35 and hub member 31 (and, therefore, sleeve member 33 engaged non-rotatably with the hub member through meshing splines 32 and 34) rotate with the same speed as that of the splined ring 28.

When the synchronous rotation has been attained, FIG. 10(d), the sleeve member 33 is further displaced, by the operating shifting force applied thereto towards the left, thereby causing some rotational displacement of the hub member 31 into the position shown in FIG 10(e) where the splines 34 of the sleeve member become meshed with splines 37 of the synchronizer ring 35. Such displacement of the sleeve member 33 is permitted because the hub member 31 is freely rotatable relative to the synchronizer ring 35 in the rotational direction shown by the arrow F. In the condition shown in FIG. 10(d), the key member 39 can be moved towards the left no more because its thrust face 59 (FIGS. 6 to 9) abuts and end face of the synchronizer ring 35 which is now restrained from leftward movement by the splined ring 28. Consequently, when the sleeve member 33 is shifted from the position shown in FIG. 10(d) to the position shown in FIG. 10(e), the key member 39 remains at the position shown in FIG. 10(d) so that annular recess 40 in the inner surface of the sleeve member 33 leaves the projection 41 on the outer surface of the key member 39.

As a result of this, the key member is pushed or depressed, as shown in FIG. 10(e), inwardly within the key-receiving groove 38. Further, as a result of some rotational displacement of the hub member 31 relative to the synchronizer ring 35 in the direction of arrow F, the axial spacing between the ramp surfaces 45 and 46 of cam grooves is increased so that the ball 47 is brought, as shown in FIG. 10(e), into a floating condition within the cam grooves.

In the condition shown in FIG. 10(e) where engagement between the clutch surfaces 29 and 36 is released, the driven side of the clutch and power train extending from hub member 31 via output shaft 22 to a propeller (not shown) and having a large inertial mass, has now been synchronized in rotation with the left-hand splined ring 28. Consequently, the sleeve member 33 can be moved by the externally applied operating force, continuously applied thereto, towards the left to achieve smooth meshing of its splines 34 with the splined ring 28, as shown in FIG. 10(f). In the condition shown in Figs. 10(e) and 10(f) re-engagement between the clutch surfaces 29 and 30 is never caused because of the floating condition of the balls 47 within the cam grooves.

The rotation of the splined ring 28 is now transmitted via sleeve member 33 and hub member 31 to the output shaft 22. This means that the forward direction gear 26 shown in FIG. 2 is coupled to the output shaft 22. In the fully engaged condition of the clutch, the synchronizer ring 35 does not participate in torque transmission and is freed so that it takes a position shown in FIG. 10(g) where the clutch surface 36 thereof is apart from the clutch surface 29 of the splined ring 28 under the action of the springs 58. Similarly, key member 39 is also in a free condition to take up a free position within the clearance between protrusions 54 and legs 55 shown in FIG. 9. The key member 39 may thus take a position shown in FIG 10(g) where it is restrained from a rightward movement, as viewed in FIG. 10(g), due to abutment of the legs 55 against protrusions 54 as shown in FIG. 9.

During the clutch-engaging process of the left-hand clutch mechanism and also in the fully engaged condition of such clutch mechanism, a right end portion of the key member 39 is always located between the first and second stopper projections 48 and 49 on the righthand synchronizer ring 35 so as to prevent the latter from rotational displacement so that accidental spontaneous engagement of the righthand clutch mechanism cannot occur. Centrifugal force caused by the rotation of the hub member 31 acts on the righthand balls 47 so as to engage same with the ramp surface 45 so that the righthand synchronizer ring 35 might be displaced towards the right (without a rotational displacement) to cause contact between clutch surfaces 29 and 36 resulting in abnormal wear of the clutch surfaces. This is avoided by the return spring 58 which prevents rightward displacement of the righthand synchronizer ring 35.

The clutch-disengaging process for the left-hand clutch mechanism from the fully engaged condition shown in FIG. 10(g) to the neutral condition shown in FIG, 10(a) will now be explained with reference to FIGS. 10(h) to 10(k).

When the sleeve member 33 is displaced or shifted from the position shown in FIG. 10(g) towards the right using the shifter 60 shown in FIG. 1 the splines 34 of the sleeve member are disengaged from the lefthand splined ring 28 as shown in FIG. 10(h).

When the sleeve member 33 has reached a position where the splines 34 have been pulled out of the spaces between adjacent splines 37 as shown in the lower part of FIG. 10(i), the synchronizer ring 35 becomes rotatable relative to the hub member 31. Consequently, so far as any contact of the synchronizer ring 35 with the splined ring 28 occurs or so far as there exists a body of lubricant, sludge or the like between the splined ring 28 and the synchronizer ring 35, the synchronizer ring 35 becomes dragged by the rotating splined ring 28 to rotate in the direction of arrow F so that the axial spacing between the bottom ramp surfaces 45 and 46 of cam grooves is reduced. Consequently, the synchronizer ring 35 is urged by the ball 47 towards the splined ring 28 so that re-engagement between the clutch surfaces 29 and 36 may be caused as shown in the upper side view of FIG. 10-(i).

When the sleeve member 33 is displaced towards the right as shown in FIGS. 10(h) and 19(i), the key member 39 is left behind its legs 55 are in engagement, as shown in FIG. 9, with the protrusions 54 on the bottom surface of the key-receiving groove 38. Consequently, when the sifter sleeve 33 is displaced via the position shown in the upper part of FIG. 10(i) into a position shown in the upper part of FIG. 10(j) where annular recess 40 in the inner surface of sleeve member 33 becomes aligned with projection 41 on the outer surface of key member 39, the key member is moved under the bias of spring 43 radially outwardly so that the projection 41 is received again in the annular recess 40 as shown in the upper part of FIG. 10(j). Accordingly, the legs 55 of the key member shown in FIG. 9 are raised to the level of the upper surfaces of the protrusions 54 so that, from the condition shown in FIG. 10(j), the key member 39 is moved towards the right as the sleeve member 33 is displaced towards the right.

During this rightward movement of the key member 39, the first inner end face 51 of recess 50 of the key member 39 becomes engaged, as shown in FIG. 10(k), with the first stopper projection 48 of synchronizer ring 35. As the key member 39 is moved further towards the right by sleeve member 33, the inclined end faces or ramp surface 51 pushes the first projection 48 so as to rotate the synchronizer ring 35 relative to the hub member 3 in the direction opposite to that of arrow F. By such rotational displacement of synchronizer ring 35, the ball 47 becomes disengaged from the bottom ramp surfaces 45 and 46 of the cam grooves and synchronizer ring 35 becomes separated from the splined ring 28 so that engagement between the clutch surfaces 29 and 36 is released. The first stopper projection 48 will move of the recess 50 due to the rotational displacement of synchronizer ring 35 in the direction opposite to arrow F. During further displacement of the sleeve member 33 to its neutral position, the key member 39 is moved to the position shown in FIG. 10(a) where it is sandwiched between the first and second projections 48 and 49 on the synchronizer ring 35.

During this disengagement of the lefthand clutch mechanism having been detailed hereinbefore, spontaneous engagement of the righthand clutch mechanism as well as contact between the righthand synchronizer ring 35 and splined ring 28 are also prevented.

Clutch-engagement and disengagement for the righthand clutch mechanism takes place in a similar manner bearing in mind the reverse direction of rotation of the righthand splined ring 28 as shown by arrow R.

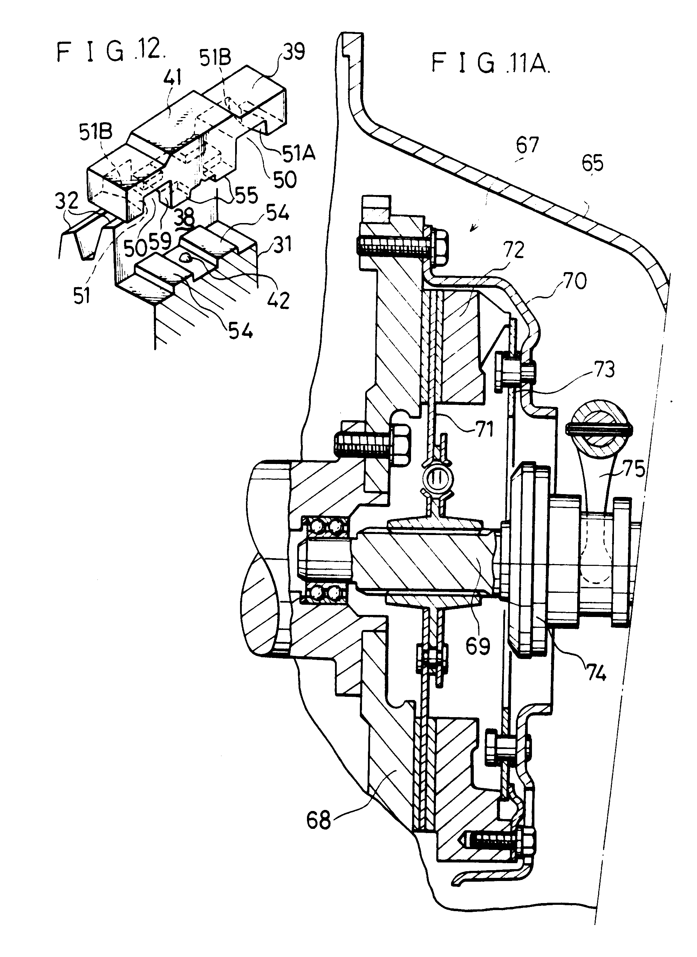

FIGS. 11A to 14 depict a second preferred embodiment of the invention in a vehicle power transmission shown in FIGS. 11A and 11B.

In FIGS. 11A and 11B, a clutch housing 65 and a gearbox 66 are arranged in a tractor in series in the longitudinal direction of the tractor so as to constitute a part of the vehicle structure. A main friction clutch 67 is disposed within the clutch housing 65 for selectively interrupting the input of engine power into the gearbox, whereas a speed-change mechanism is disposed within the gearbox 66.

The main clutch 67 is operable to disconnect selectively an engine flywheel 68 and an input shaft 69 of the gearbox 66. Within a clutch cover 70 which is secured to the flywheel 68 are disposed a clutch disk 71, which is mounted non-rotatably on the input shaft 69, a pressure plate 72 and a diaphragm spring 73 which are co-rotatable with the clutch cover 70. The clutch disk 71 is urged by the spring 73 via pressure plate 72 so as to engage frictionally with the flywheel 68. On the input shaft 69 is slidably mounted a release bearing 74 with which a disengager fork 75 is engaged. When a clutch pedal not shown in the drawings is pressed down so as to displace the bearing 74 towards the left, as viewed in FIG. 11A, by means of the fork 75, the diaphragm spring 73 which also functions as a set of clutch levers is moved so as to displace the pressure plate 72 away from the clutch disk 71 so that the main clutch is released.

The input shaft 69 extends at its rear end portion into the gearbox 66 to carry an integral input gear wheel 76. Within the casing 66 are arranged an output shaft 77, which extends co-axially with the input shaft 69, and a hollow countershaft 79 which is rotatably mounted on a fixed support shaft 78 which extends parallel to the output shaft 77. The countershaft carries at its front end portion an integral gear wheel 80 which meshes with the input gear wheel 76 so that the countershaft 79 is constantly driven by the input shaft 69. The countershaft 79 has formed thereon three integral counter gearwheels 81, 82 and 83, whereas the output shaft 77 mounts rotatably three speed-change output gear 84, 85 and 86. The gear wheel 81 and 84 directly mesh with the gear wheels 82 and 85 respectively, whereas gear wheels 83 and 86 each mesh with an idler gear wheel 88 which is rotatably supported by a stub shaft 87 fixed to the gearbox casing.

The input gear wheel 76 has an integral splined ring 28 extending over a front end portion of the output shaft 77. Similarly, each of the output gear wheels 84, 85 and 86 on the output shaft has an inergral splined ring 28. A double-acting synchronizing clutch assembly similar to that of the first embodiment is disposed between each pair of adjacent rings 28.

The gearbox provides selectively first to third forward speeds and a reverse speed to the output shaft 77. The output shaft 77 is drivingly connected to the rear axle (not shown) of the tractor.

The synchronizing clutch of the second embodiment will be detailed hereinafter by designating various members and parts, including the splined rings 28 referred to above, with like numerals as employed in the description of the first embodiment.

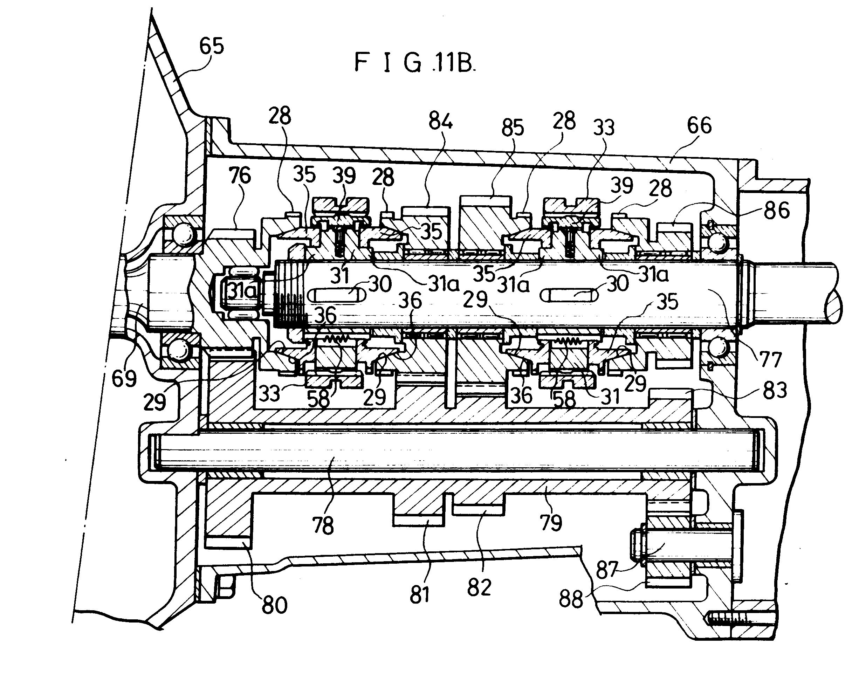

As shown in FIG. 11B, each of the two sets of double-acting clutch assemblies comprises a member 31 mounted slidably but non-rotatably on the hub member by a splined connection, a pair of synchronizer rings 35 slidably mounted on reduced-diameter end portions 31a of the hub member 31, and one or more keys 39 slidably received in one or more key-receiving grooves 38 (FIG. 12) in the outer circumference of the hub member 31, all of which will function in the same manner as do the corresponding members of the first embodiment.

The synchronizer clutch assembly of the first embodiment is employed in a marine reversing gear shown in FIG. 1 so that, prior to an operation of the synchronizing clutch mechanism involving reversing of the rotational direction of output shaft 22, the splined ring 28 is rotating necessarily with a speed higher than that of the output shaft 22. In other words, the synchronizing clutch mechanism of the first embodiment necessarily performs a speed-up engagement by which the output shaft 22 is brought from a lower-speed condition to a higher-speed condition. Contrary to this, the synchronizing clutch mechanism of the second embodiment is employed in a speed-change transmission which is operated for a speed-change purpose in a condition where the main clutch 67 shown in FIG. 11A has been already disengaged. The rotational speed of the splined ring 28 prior to the operation of engagement of such synchronizing clutch mechanism may be either higher or lower than that of the output shaft 77 in dependence on various conditions such as which speed was previously engaged and how a clutch-engaging operation for the new speed is timed relative to the disengagement of the main clutch and whether a speed-change operation is carried out as the vehicle is running up or down a slope, and so on. Consequently, it is required to make this synchronizing clutch mechanism such that it can perform both for downwards speed changes by which the input shaft 74 is brought from a lower-speed condition to a higher-speed condition, and upwards speed changes by which the input shaft 74 is brought from a higher-speed condition to a lower speed condition.

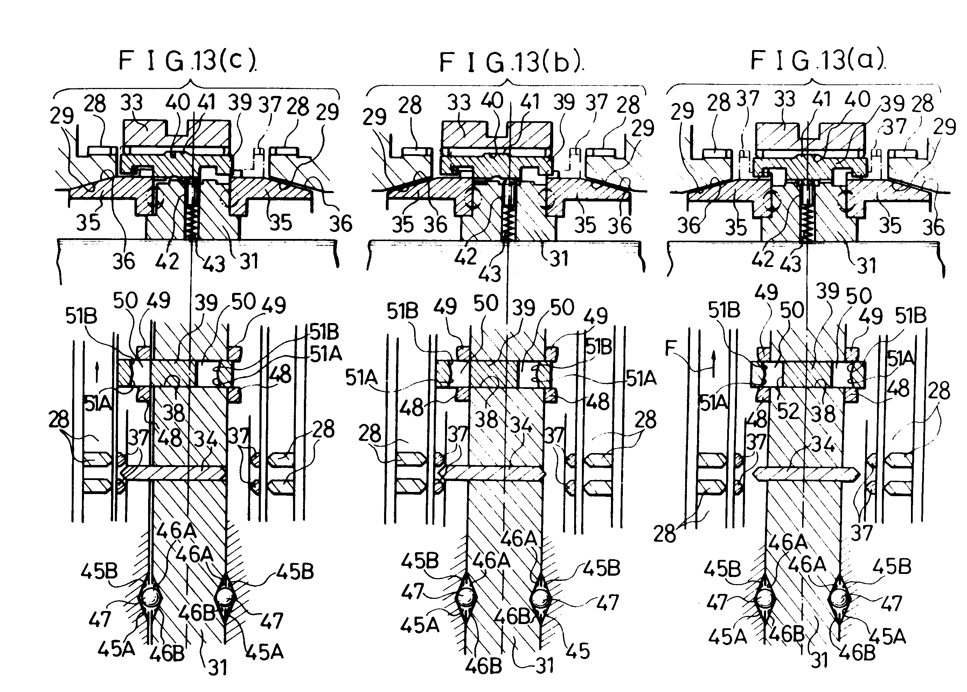

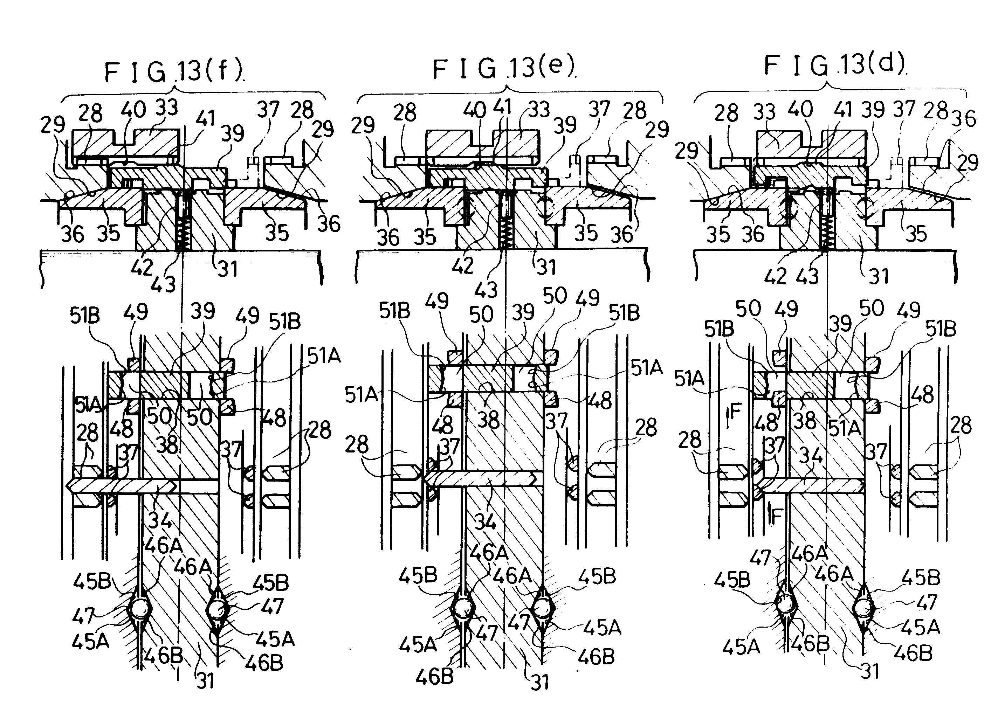

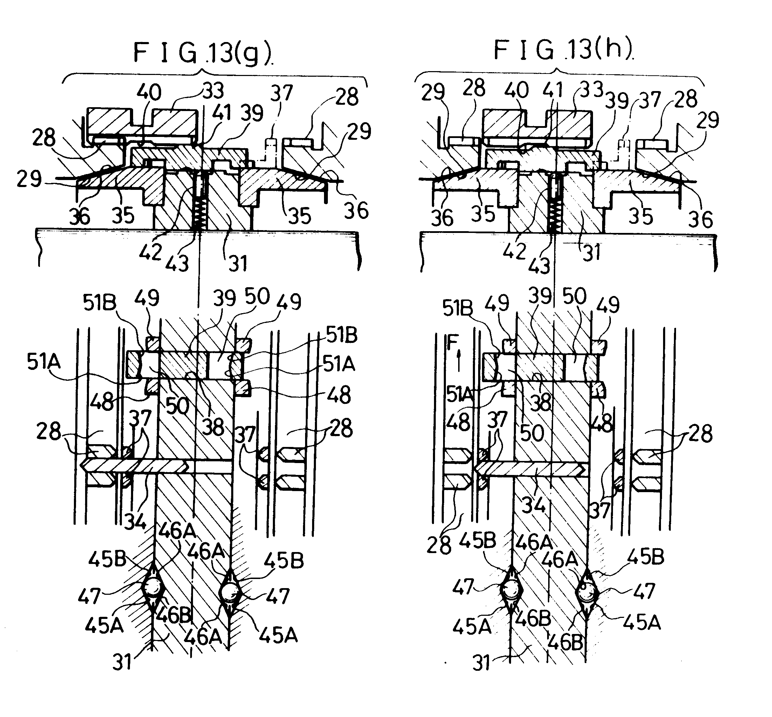

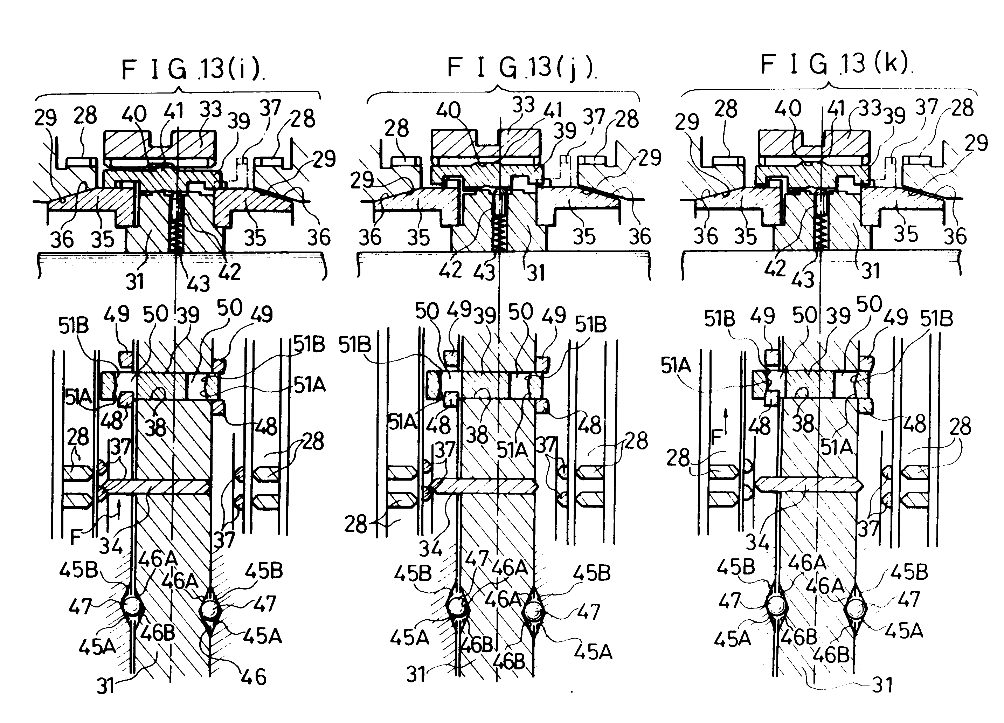

As shown in FIGS. 12 and 13(a), the key member 39 includes a recess 50 having an axial end face, located at the side of the splined ring 28, which face has thereon first and second ramp surfaces 51A and 51B inclined in opposite directions. Of the first and second stopper projections 48 and 49 on the synchronizer ring 35, the second projection 49 has a size similar to that of the first projection 48 and has a chamfered fate extending substantially parallel with the second ramp surface 51B.

As shown in FIG. 13(a), the opposite end faces of the synchronizer ring 35 and the hub member 31 include V-shaped cam grooves having a first pair of bottom ramp surfaces 45A and 46A, which are inclined in the same angular direction the ramp surfaces 45 and 46 in the first embodiment and a second pair of bottom ramp surfaces 45B and 46B which are inclined in the opposite direction. The ball 47 is received in such cam grooves. The lefthand and righthand recesses 50 of the key member 39 are similarly shaped. This also applies to the lefthand and righthand cam grooves formed in the hub member 31 and synchronizer rings 35.

The angular position of each synchronizer ring 35 relative to the hub member 31 in the neutral condition of the clutch shown in FIG. 13(a) is determined by the positioning of the first and second stopper projections 48 and 49 on the synchronizer ring 35 relative to the key-receiving groove 38 in the hub member 31. Such angular position of the synchronizer ring 35 in the neutral condition is predetermined such that each of the splines 34, which are meshed with the splines 32 of the hub member 31, is aligned axially with the space between two adjacent splines 37 of the synchronizer ring 35.

The other parts of the second embodiment are constructed similarly to the corresponding parts of the first embodiment and are designated by like numerals.

FIGS. 13(a) to 13(k) are views showing stages in engagement and subsequent disengagement of the clutch in a fashion similar to FIGS. 10 (a) to 10-(k). It is assumed that the lefthand splined ring 28 rotating relative to hub member 31 in the direction of arrow F shown in FIG. 13 (a).

During the upward-change engagement process from the neutral condition shown in FIG. 13 (a) to the fully engaged condition shown in FIG. 13 (g), the clutch-engaging process from the neutral condition via the stage shown in FIG. 13(b) to the stage shown in FIG. 13(c) proceeds similarly to the first embodiment, namely in manner set forth before by referring to FIGS. 10(b) and 10(c), with the exception that the splines 34 of the sleeve member 33 do not come into contact with the splines 37 of the synchronizer ring 35.

At the stage shown in FIG 13(c), where synchronizer ring 35 is moved by the key member 39 towards the left so as to cause an initial engagement between the first and second clutch surfaces 29 and 36, the synchronizer ring 35 is rotated relative to the hub member 31 in the direction of arrow F, as shown in FIG. 13(d), so that the axial spacing between the ramp surfaces 45A and 46A becomes reduced. Consequently, as described before with respect to the first embodiment (FIG. 10d), the synchronizer ring 35 is urged towards the left by the ball 47 since the sleeve member 33 is restrained from a leftward movement due to engagement between the tapered end faces of the splines 34 and 37. As a result, full engagement between the clutch surfaces 29 and 36 becomes achieved spontaneously and quickly. The synchronizer ring 35 now rotates synchronously with the splined ring 28, and the hub member is also rotated synchronously by the ring 35 through ball 47.

In contrast to the first embodiment, the hub member 31 employed in the second embodiment cannot be displaced rotationally by sleeve member 31 in the direction of arrow F because the hub member 31 is permanently connected to the rear axle and the wheels of the vehicle. However, the main clutch 67 (FIG. 11A) is now in a released condition so that the splined gear 28 and synchronizer ring 35 are now freely rotatable relative to the hub member in the direction opposite to the arrow F. Accordingly, after synchronized rotation has been attained in the condition shown in FIG. 13(d) the sleeve member 33 is displaced towards the left by the drivers force applied thereto, thereby causing some rotational displacement of the synchronizer ring 35 in the opposite direction to arrow F relative to the hub member 31, so that splines 34 of the sleeve member 33 engage, as shown in FIG. 13(e) with respect to one of such splines, with the splines 37 of the synchronizer ring 35. In the second embodiment, the first stopper projection 48 of synchronizer ring 35 is moved, as shown in FIG. 13(e) out of the recess 50 of key member 39 as a result of the rotational displacement of the ring 35 referred to above.

The synchronizer ring 35 becomes freed at the condition shown in FIG. 13(e). The sleeve member 33 is further moved towards the left by the operating force continuously applied thereto so that meshing of the splines 34 thereof with splines of the splined ring 28 is attained, as shown in FIG. 13-(f), with ease, as is the case in the first embodiment and as described before with reference to FIG. 10(f).

In the fully engaged condition of the clutch shown in FIG. 13(g), the synchronizer ring 35 and key member 39 take, respectively, positions similar to those in Fig. 10(g).

Prior to a disengagement operation of the left-hand clutch mechanism from the fully engaged condition shown in Fig. 13(g), the main clutch 67 shown in FIG. 11A is disengaged once again. In a case where the splined ring 28 is rotating faster than the hub member 31 in the direction of arrow F shown in FIG. 13(h) after the main clutch has been released, the clutch-disengagement process will proceed in a manner similar to that for the first embodiment.

When the splines 34 of the sleeve member 31 are released by a rightward shifting thereof from the splined ring 28, as shown in FIG. 13(h), and then from splines 37 of the synchronizer ring 35, as shown in FIG. 13(i), the synchronizer ring 35 may rotate relative to the hub member and, therefore, re-engagement between the first and second clutch surfaces 29 and 36 shown in FIG. 13(i) may be caused. When such re-engagement is caused, the first stopper projection 48 of synchronizer ring 35 enters the recess 50 of the key member 39 again as a result of rotational displacement of the synchronizer ring 35 relative to the hub member 31 towards the direction of arrow F.

Consequently, after the projection 41 of the key member 39 has entered the annular recess 40 of sleeve member 33, as shown in FIG. 13(j), so that the key member 39 has been engaged co-slidably with the sleeve member 33, and after the key member 39 has been displaced to the position shown in FIG. 13(k) where the ramp surface 51A comes into abutment with the first projection 48 of the synchronizer ring 35, the ring 35 is rotated relative to hub member 31 in the opposite direction to arrow F so that the neutral condition shown in FIG. 13(a) is obtained in the manner detailed before with reference to FIG. 10(k). If re-engagement of the clutch surfaces 29 and 36 shown in FIG. 13-(i) is not caused, the first projection 48 does not participate in the clutch-disengaging process and acts only as a stopper for preventing rotational displacement of the synchronizer ring in the neutral condition in cooperation with the second projection 49 and key member 39.

A speeding-down engagement and a subsequent disengagement of the clutch will now be explained with reference to FIGS. 13(b) to 14(k) which correspond, respectively, to the lower parts of FIGS. 13(b) to 13.(k).

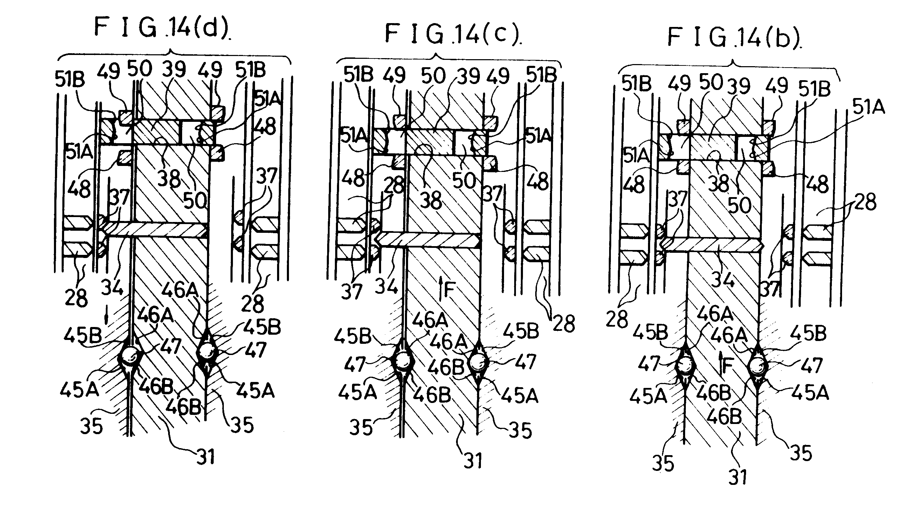

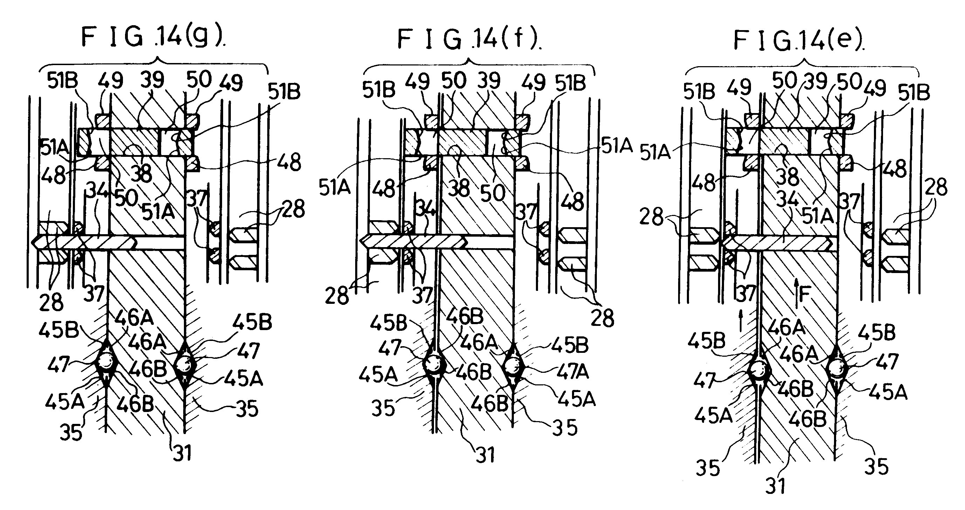

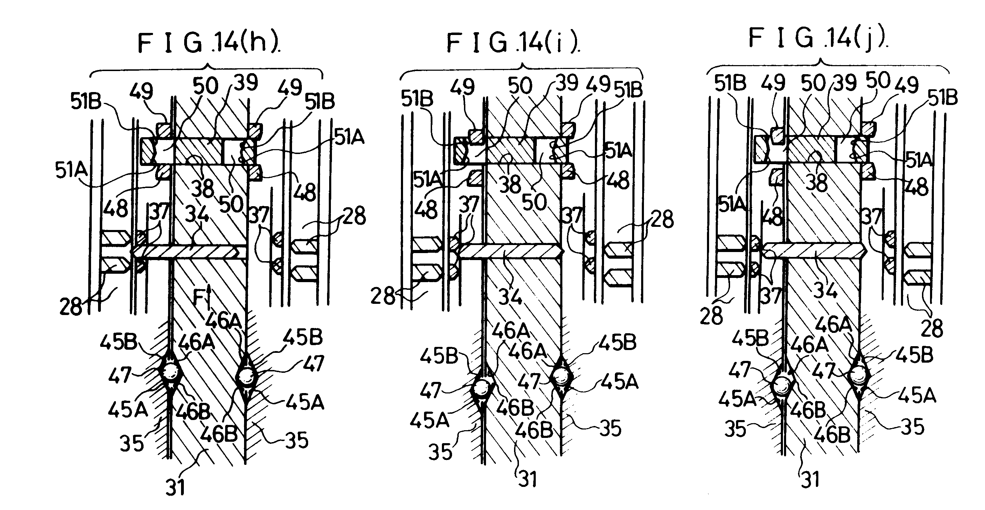

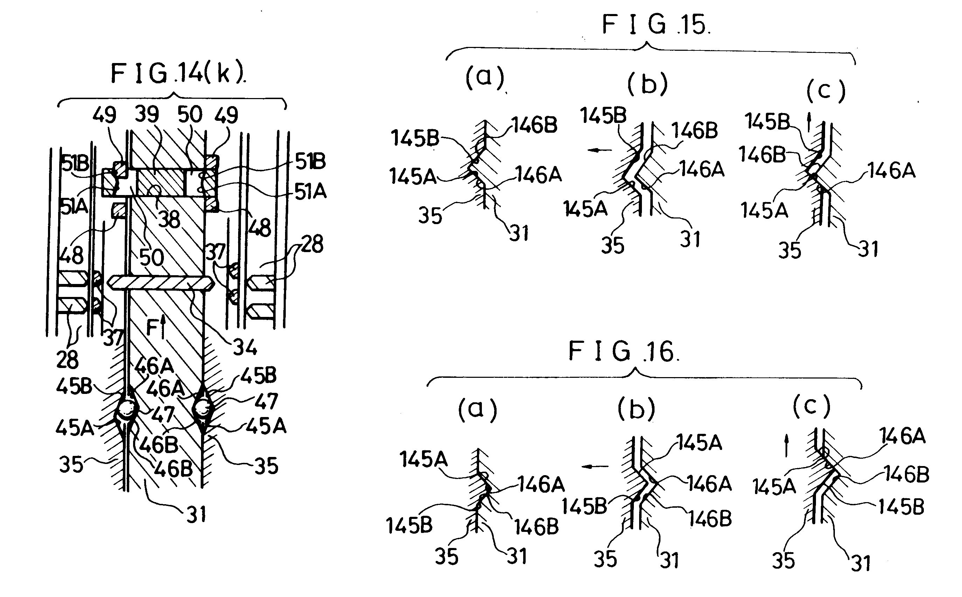

Initially, after the main clutch 67 shown in FIG. 11A has been released, the output shaft 77 is rotating faster than the lefthand splined ring 28, as viewed in FIG. 14(b), so that the hub member 31 is rotating relative to the splined ring 28 in the direction of the arrow F shown in FIG. 14(b). As the sleeve member 31 is shifted from the neutral position shown in FIG. 13(a) towards the left, the clutch-engaging process will proceed via the condition shown in FIG. 14(b) to the condition shown in FIG. 14(c). These conditions are same as those shown in FIGS. 13(b) and 13(c).

When the condition shown in FIG. 14(c) has been reached so that an initial engagement between the clutch surfaces 29 and 36 has been caused as shown in the upper part of FIG. 13(c), the synchronizer ring 35 is dragged by the splined ring 28 so that a rotational displacement of the ring 35 relative to the hub member 31 is caused. Because the rotational speed of the hub member 31 is higher than that of the splined ring 28, such rotational displacement of the synchronizer ring 35 is made in the opposite direction to arrow F.

Consequently, the axial spacing between the second ramp surfaces 45B and 46B becomes reduced, as shown in FIG. 14(d), and, therefore, the synchronizer ring 35 is urged towards the left by the thrust force of ball 47 acting upon the ramp surface 45B so that full engagement between the clutch surfaces 29 and 36 is attained spontaneously. As a result of the rotational displacement of synchronizer ring 35 set forth above, the second projection 49 thereof enters in the recess 50 of key member 39.

The synchronizer ring 35 now co-rotates with hub member 31 through ball 47, and splined ring 28 now rotates synchronously with the synchronizer ring 35 due to the full engagement of clutch surfaces 29 and 36. Because the main clutch 67 shown in FIG. 11A is in a released condition, the synchronizer ring 35 is rotatable relative to the hub member 31 in the direction of arrow F. Consequently, the sleeve member 33 is displaced towards the left by the external force applied thereto, causing some rotational displacement of the synchronizer ring 35 in the direction of arrow F relative to the hub member 31, so that splines 34 of the sleeve member 33 are meshed, as shown in FIG. 14(e), with the splines 37 of the synchronizer ring 35. As a result of the rotational displacement of synchronizer ring 35 referred to above, the second projection 49 thereof is moved out of the recess 50 of key member 39.

The synchronizer ring 35 becomes freed at the condition shown in FIG. 14(e).The sleeve member 33 is further moved towards the left by the external operating force continuously applied thereto so that meshing of the splines 34 thereof with the splined ring 28 is attained, as shown in FIG. 14(f), with ease.

The fully engaged condition of the clutch shown in FIG. 14(g) is the same as that shown in FIG. 13(g).

In a case where the hub member 31 is rotating faster than the splined ring 28 in the direction of arrow F shown in FIG. 14(h), after the main clutch 67 has been released prior to a disengaging operation of the lefthand clutch mechanism from the condition shown in FIG. 14(g), the clutch-disengaging process may proceed in a manner shown in FIGS. 14(h) to 14(k). When the splines 34 of the sleeve member 31 are released from the splined ring 28, as shown in FIG. 14(h), and then the splines 37 of the synchronizer ring 35 may rotate relative to hub member 31 in the opposite direction to arrow F due to, for example, some contact with the splined ring 28 so that re-engagement of the clutch surfaces 29 and 36 similar to that shown in the upper part of FIG. 13(i) may be caused here again by the action of ball 47.

When such re-engagement is caused, the second projection 49 of the synchronizer ring 35 enters the recess 50 of the key member 39 and faces axially of the clutch, towards the second ramp surfaces 51B, as shown in FIG. 14(i), as a result of the rotational displacement of the synchronizer ring 35 relative to the hub member 31. Consequently, in a manner similar to that described above with reference to FIGS. 13(j) and 13(k), after the condition shown in FIG. 14(k) has been attained via the condition shown in FIG. 14(j), the second ramp surface 51B begins to push the second projection 49 so as to rotationally displace the synchronizer ring 35 in the direction of arrow F. The neutral condition shown in FIG. 13(a) is thus attained, as required.

Disengagement of the clutch mechanism from the fully engaged condition shown in FIGS. 13(g) and 14(g) may proceed either in accordance with the process shown in FIGS. 13(h) to 13(k) or in accordance with the process shown in FIGS. 14(h) to 14(k).

As can be understood now, such process is determended by the differently between the rotational speeds of the splined ring 28 and the hub member 31 which still rotate by inertia after the main clutch has been disengaged for a gear changing operation. By way of example, the rotational speed of the hub member is relatively low when the vehicle is running up hill, but relatively high when the vehicle is running down hill.

The synchronizer clutch assembly of the second embodiment may also be used in a marine reversing gear such as shown in FIG. 1. In such a case, the second projection 49 of the synchronizer ring 35 acts in cooperation with the key member 39 only as a stopper for preventing an undesirable rotational displacement of the ring 35 because only the speed increasing engagement of the clutch mechanism is performed.

In both embodiment described above, the cam means disposed between 31 is so constructed as to include a ball 47. Such cam means may also be fashioned, as shown respectively in FIG. 15 and FIG. 16, such that it comprises ramp surfaces 145A, 145B, 146A and 146B which coast directly without a ball. Each of the cam means shown in FIGS. 15 and 16 is designed as an alternative for the cam means employed in the second embodiment and comprise a first pair of ramp surfaces 145A and 146A, which become engaged with each other when synchronizer ring 35 is rotationally displaced relative to hub member 31 in a first direction, and a second pair of ramp surfaces 145B and 146B which become engaged with each other when the synchronizer ring 35 is rotationally displaced with the hub member 31 in the other direction. The cam means shown in FIG. 15 included a V-shaped projection for providing ramp surfaces 145A and 145B on the end face of the synchronizer ring 35 and a V-shaped recess for providing ramp surfaces 146A and 146B in the end face of the hub member 31, whereas the cam means shown in FIG. 16 includes a V-shaped recess for providing ramp surfaces 145A and 145B on the end face of the synchronizer ring 35 and a V-shaped projection for providing ramp surfaces 146A and 146B on the end face of the hub member 31.

When the synchronizer ring 35 is displaced from a neutral condition shown in FIG. 15(a) or 16-(a) towards a splined ring (not shown), as shown by an arrow in each of FIGS. 15(b) and FIG. 16(b), so that an initial engagement between the first and second clutch surfaces is caused in the manner described above, the ring 35 becomes displaced rotationally relative to the hub member 31, as shown by the arrow in both FIG. 15(c) and FIG. 16-(c), so that engagement between the first pair of ramp surfaces 145A and 146A is attained. In a case where rotational displacement of the synchronizer ring 35 is caused in the reverse direction, engagement between the second pair of ramp surfaces 145B and 146B will be attained.

The cam means shown in each FIGS. 15 and 16 is not preferred in the respect that the frictional force acting between the ramp surfaces of synchronizer ring 35 and hub member 31 will resist sliding movement of the synchronizer ring 35. On the other hand, such cam means helps, during an operating process of the clutch mechanism of one side, to reduce undesirable axial displacement of the synchronizer ring 35 of the other side.

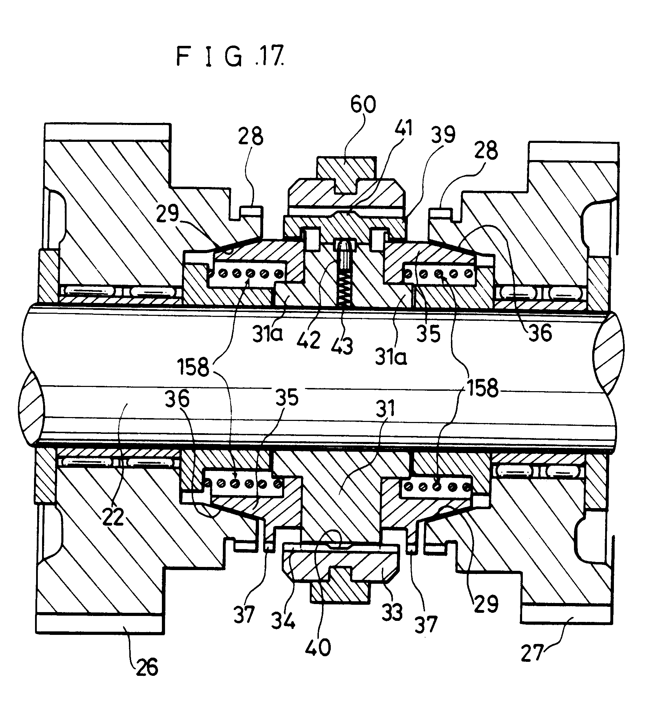

An alternative to the return spring 58 employed in the first embodiment is shown in FIG. 17. In place of the tension spring 58 which pulls synchronizer rings 35 of both sides towards each other, a pair of compression coil springs 158 are disposed between the respective drive gears 26, 27 and synchronizer rings 35 for biasing each of the synchronizer rings 35 individually to move towards the neutral position thereof. Although the return springs are increased in number, the structure shown in FIG. 17 permits an easier assembly of the clutch mechanism as compared to the structure shown in FIG. 2.

Although only double-acting clutch assemblies are shown, the synchronizing clutch assembly according to the present invention may, of course, be designed as a single-acting clutch assembly which operates to couple a single gear to a transmission shaft.

**Claims**

1.  A synchronizing clutch assembly comprising: a transmission shaft (22); a drive gear (26) having an integral splined ring (28) mounted rotatably on the transmission shaft 22), the splined ring (28) having an internal conical first clutch surface (29); a hub member (31) fixedly mounted on the transmission shaft (22) and having external first splines (32) shaft; an axially shiftable sleeve member (33) having internal second splines (34) engageable with the splined ring (28) the sleeve member (33) being slidably but non-rotationally mounted on the hub member by engagement between the first and second splines (32 and 34); a synchronizer ring (35) having an external conical second clutch surface (36), engageable frictionally with the first clutch surface (29), and third external splines (37) with which the second splines (34) may be meshed, the hub member having reduced-diameter end portion (31a) on which said synchronizer ring is slidably mounted; and a key member (39) slidable in an axial groove (38) in the outer circumference of the said hub member, and capable of pushing the synchronizer ring (35) into frictional engagement with the splined ring (28) via the first and second clutch surfaces (29,36) the key member (39) having an external projection (41), receivable in an annular recess (40) formed in the interior of the sleeve member (33), and being biased radially outwardly of said hub member so as to engage yieldably by means of the projection (41) with said sleeve member so that when the sleeve member is shifted from a neutral position towards the splined ring (28) the key member (41) is moved towards the synchronizer ring, characterised in:

    a cam means (45,46,47; 45A,45B,46A,46B,47; 145A, 145B, 146A, 146B) acts between opposed end face of the synchronizer ring (35) and said hub member (31) in response to initial rotational displacement of the synchronizer ring (35) relative to said hub member (31) under initial frictional engagement between said first and second clutch surfaces (29,36), to increase the frictional engagement of the synchronizer ring with the hub member and to force said synchronizer ring to move towards the splined ring (28);

in that a stopper means (48,49) is provided on the outer circumference of said synchronizer ring (35) to engage the key member (39) so as to prevent rotational displacement of the synchronizer ring when the sleeve member (33) is in its neutral position, whereas when the key member is displaced from a neutral position thereof towards the splined ring (28) by a predetermined small amount, the stopper means is released from engagement with said key member through a recess (50) in the key member so as to permit rotational displacement of said synchronizer ring; and

in that a ramp surface (51; 51A,51B) is formed on that inner end face of the recess (50) of said key member (39) which is positioned nearer to the splined ring (28), such that when the key member is displaced axially away from the splined ring (28) when the stopper means (48,49) is located within the recess (50), the said ramp surface pushes the stopper means so as to rotate the synchronizer ring (35) in the direction to move the synchronizer ring (35) in the direction to move the stopper means out of the recess of the key member.

2. A synchronizing clutch assembly according to claim 1, characterised in that the cam means comprise a pair of cam grooves having ramp surfaces (45,46) formed in opposed end faces of the synchronizer ring (35) and the hub member (31), and a ball between the ramp surfaces (45,46).

3. A synchronizing clutch assembly according to claim 1 or 2, characterised in that the stopper means on the synchronizer ring comprises a first projection (48) to engage, in the neutral condition, the key member (39) from the upstream side relative to the direction of rotation of the splined ring (28) and a second projection (49) which is on the downstream side of the key member in the neutral condition, and in that the inner end faces of said recess (50) of said key member (39), which is positioned nearer to the said splined ring (28) than the other end face (52) has thereon a ramp surface (51) having an inclination such that when the key member is displaced axially away from the splined ring in a condition in which the first projection (48) is located within the recess (50) of said key member, the said ramp surface pushes the first projection so as to rotate the synchronizer ring (35) in the direction opposite to the direction of rotation of the splined ring (28).

4. A synchronizing clutch assembly according to claim 1 or 2, characterised in that the said inner end face of the/or each recess (50) of said key member (39), has thereon first and second ramp surfaces (51A, 51B), said first ramp surface (51A) having an inclination such that, when said key member is displaced axially away from the splined ring (28) with the first projection (48) located within the recess (50) of said key member, the first ramp surface pushes the first projection so as to rotate said synchronizer ring (35) in a second direction, whereas the second ramp surface (51B) has an inclination such that, when said key member is displaced axially away from said clutch gear in a condition where the second projection (49) is located within said recess (50) of said key member, the said second ramp surface (51B) pushes the second projection to rotate the synchronizer ring in the first direction.

5. A synchronizing clutch assembly according to claims 3 or 4 in which the assembly comprises two axially spaced drive gears rotatably mounted on the transmission shaft, each drive gear having an integral splined ring 28 with an internal conical surface, and a synchronizer ring (35) for each drive gear, characterised in that each of said synchronizer rings (35) has at an outer circumference thereof a first projection (48), which engages in the neutral position of the sleeve member (33) with the key member (39) from an upstream side of the direction of rotation of the splined ring (28), and a second projection (49) which engages in the neutral position of the sleeve member with the key member from the downstream side, the first and second projection of the pair of synchronizer rings being arranged such that even in a condition where the key member (39) is located in the position closest to the splined ring (28) at one side, an end portion of the key member still remains between the first and second projections of the synchronizer ring at the other side, whereas a pair of axially spaced recesses (50) are formed in an inner surface of the key member such that, when said key member is displaced from a neutral position thereof towards one splined ring (28) by a predetermined small amount, each of the said

14

recesses releases each of the said first projections so as to permit a rotational displacement of each synchronizer ring in the direction of rotation of the splined ring (28) of said clutch gear.

6. A synchronizing clutch assembly according to claim 5, characterised in that hub member (31) is provided at a bottom surface of its key-receiving groove (38) with portions (54) which limit axial sliding movement of said key member (39) within a predetermined range when the projection (41) of the key member is out of the annular recess (40) of the sleeve member (33) and the key member is depressed by the sleeve member within said key-receiving groove radially inwardly of the hub member, and in that the inner end face of each of said recesses (50) of said key member which is positioned nearer to the respective splined ring (28), has thereon a ramp surface (51) having an inclination such that, when said key member is displaced axially away from the splined ring when each of said first projections (48) is located within said each recess of the key member, the said ramp surface pushes each said first projection so as to rotate each of said synchronizer rings (35) in a direction opposite to the direction of the splined ring.

7. A synchronizing clutch assembly according to claim 6, characterised in that the key member (39) has a T-shaped configuration including a depending leg portion, which extends from an axial mid portion of said key member radially inwardly of said hub member (31), and a pair of axial extensions which extend towards said pair of synchronizer rings (35), a pair of thrust surfaces (59) for pushing selectively the synchronizer rings (35) being formed on the axial end faces of the leg portion and the pair of recesses (50) being formed in inner surfaces of said pair of axial extensions.

8. A synchronizing clutch assembly according to any preceding claim, characterised in that the key member (39) has at an axial mid location of an inner surface thereof a notch (44) and the hub member (31) receives therein a latch pin (42) resiliently biased outwardly radially to project into the notch in the neutral position of the sleeve member (33) by a spring (43) disposed within said hub member, the spring constituting the sole biasing means for biasing said key member radially outwardly of said hub member.

9. A synchronizing clutch assembly according to claim 6, characterised in that said pair of synchronizer rings (35) are biased towards each other by a tension spring (58) which extends through an axial thorough bore (57), formed in said hub member (31), and hooked at both ends thereof to said synchronizer rings.

10. A synchronizing clutch assembly according to any of claims 1 to 8, characterised in that the or each synchronizer ring (35) is biased towards the hub member (31) by a compression spring (158) which is disposed between the associated drive gear (26,27) and the synchronizer ring.

**Revendications**

1. Une unité de synchronisation d'embrayage comprenant:
   un arbre de transmission (22);
   un engrenage de commande (26) comprenant un anneau cannelé d'une seule pièce (28) libre en rotation sur l'arbre de transmission (22), l'anneau cannelé (28) ayant une première surface d'embrayage interne conique (29);
   un moyeu (31) monté fixe sur l'arbre de transmission (22) et ayant des premières cannelures externes (32);
   un manchon mobile axialement (33) ayant des deuxièmes cannelures internes (34) pouvant s'engager sur l'anneau cannelé (28), le manchon (33) étant monté de façon à pouvoir coulisser mais pas tourner sur le moyeu par engagement entre les premières et deuxièmes cannelures (32 et 34);
   un anneau synchroniseur (35) ayant une seconde surface d'embrayage externe conique (36) engageable par friction avec la première surface d'embrayage, et des troisièmes cannelures externes (37) avec lesquelles les deuxièmes cannelures (34) peuvent s'engrener, le moyeu ayant une extrémité à diamètre réduit (31a) sur laquelle ledit anneau synchroniseur est monté coulissant;
   et un élément clavette (39) qui coulisse dans une rainure axiale (38) située sur le pourtour extérieur dudit moyeu, et qui est capable de pousser l'anneau synchroniseur (35) à engager par friction l'anneau cannelé (28) via les première et seconde surfaces d'embrayage (29,36), l'élément clavette (39) ayant une saillie externe (41), qui peut se loger dans une encoche annulaire (40) formée à l'intérieur du manchon (33), et étant radialement poussé vers l'extérieur dudit moyeu de façon à s'engager sans résistance par le biais de la saillie (41) dans ledit manchon afin que, quand le manchon est déplacé d'une position neutre vers l'anneau cannelé (28), l'élément clavette (39) soit déplacé vers l'anneau synchroniseur,

caractérisée en ce que:

un moyen à cames (45, 46, 47; 45A, 45B, 46A, 46B, 47; 145A, 145B, 146A, 146B) opère entre les faces terminales opposées de l'anneau synchroniseur (35) et dudit moyeu (31) en réponse au déplacement de rotation initial de l'anneau synchroniseur (35) par rapport audit moyeu (31) sous l'engagement de friction initial entre lesdites première et seconde surfaces d'embrayage (29,36) pour accroître l'engagement de friction de l'anneau synchroniseur avec l'élément moyeu et pour forcer ledit anneau synchroniseur à se déplacer vers l'anneau cannelé (28);

en ce qu'une butée (48,49) est prévue sur le pourtour extérieur dudit anneau synchroniseur (35) pour engager l'élément clavette (39) afin d'empêcher le déplacement par rotation de l'anneau synchroniseur quand le manchon (33) est dans sa position neutre, alors que, quand l'élément clavette est déplacé d'une position neutre vers l'anneau cannelé (28) d'une valeur faible prédéterminée, la butée est désengagée d'avec l'élément clavettes à travers une encoche (50) dans l'élément clavette de façon à permettre le déplacement de rotation dudit anneau synchroniseur; et

en ce qu'une surface inclinée (51; 51A, 51B) est formée sur celles des faces terminales intérieures de l'encoche (50) dudit élément clavette (39) qui est située la plus près de l'anneau cannelé (28), de telle manière que, quand l'élément clavette est éloigné axialement de l'anneau cannelé (28) et la butée (48, 49) est logée dans l'encoche (50), ladite surface inclinée pousse la butée afin de faire tourner l'anneau synchroniseur (35) dans le sens permettant de faire sortir la butée de l'encoche de l'élément clavette.

2. Une unité de synchronisation d'embrayage selon la revendication 1, caractérisée en ce que les moyens a cames comportent une paire de chemins de cames ayant des surfaces inclinées (45,46) formées dans les faces terminales opposées de l'anneau synchroniseur (35) et de l'élément moyeu (31); et une bille entre les surfaces inclinées (45, 46).

3. Une unité de synchronisation d'embrayage selon la revendication 1 ou 2, caractérisée en ce que la butée sur l'anneau synchroniseur comporte une première saillie (48) pour engager, en position neutre, l'élément clavette (39) à partir du côté en amont par rapport au sens de rotation de l'anneau cannelé (28), et une seconde saillie (49) qui se trouve du côté en aval de l'élément clavette en position neutre,

et en ce que la face terminale interne de ladite encoche (50) dudit élément clavette (39), qui est positionnée plus près dudit anneau cannelé (28) que l'autre face terminale interne (52), possède une surface inclinée (51) ayant une inclinaison telle que, quand l'élément clavette est éloigné axialement de l'anneau cannelé vers une position dans laquelle la première saillie (48) est logée dans l'encoche (50) dudit élément clavette, ladite surface inclinée pousse la première saillie de façon à faire tourner l'anneau synchroniseur (35) dans le sens inverse du sens de rotation de l'anneau cannelé (28).

4. Une unité de synchronisation d'embrayage selon la revendication 1 ou 2, caractérisée en ce que ladite face terminale interne de l'encoche, ou de chaque encoche, (50) dudit élément clavette (39) comporte une première et une seconde surfaces inclinées (51A, 51B), ladite première surface inclinée (51A) ayant une inclinaison telle que, quand ledit élément clavette s'éloigne axialement de l'anneau cannelé (28), la première saillie étant logée dans l'encoche (50) dudit élément clavette, la première surface inclinée pousse la première saillie de manière à faire tourner ledit anneau synchroniseur (35) dans un second sens, alors que la seconde surface inclinée (51B) a une inclinaison telle que, quand ledit élément clavette s'éloigne axialement de ladite denture, dans un état où la seconde saillie (49) est logée dans ladite encoche (50) dudit élément clavette, ladite seconde surface inclinée (51B) pousse la seconde saillie pour faire tourner l'anneau synchroniseur dans le premier sens.

5. Une unité de synchronisation d'embrayage selon les revendications 3 ou 4, dans laquelle l'unité comporte deux engrenages de commande espacés axialement montés libres en rotation sur l'arbre de transmission, chaque engrenage de commande ayant un anneau cannelé d'une seule pièce (28) avec une surface interne conique, et un anneau synchroniseur (35) pour chaque engrenage de commande,

caractérisée en ce que chacun desdits anneaux synchroniseurs (35) a sur son pourtour extérieur une première saillie (48) qui s'engage, en position neutre du manchon (33), avec l'élément clavette (39) à partir du côté situé en amont selon le sens de rotation de l'anneau cannelé (28), et une seconde saillie (49) qui s'engage en position neutre du manchon, avec l'élément clavette à partir du côté en aval,

la première et la seconde saillie de la paire d'anneaux synchroniseurs étant disposées de telle manière que, même au cas où l'élément clavette (39) est situé le plus près de l'anneau cannelé (28) d'un côté, une extrémité de l'élément clavette reste encore entre la première et la seconde saillie de l'anneau synchroniseur de l'autre côté,

alors qu'une paire d'encoches (50) espacées axialement sont formées dans une surface interne de l'élément clavette de telle sorte que, quand ledit élément clavette est déplacé d'une position neutre vers un anneau cannelé (28) d'une valeur faible prédéterminée, chacune desdites encoches libère chacune desdites premières saillies afin de permettre à chaque anneau synchroniseur de tourner dans le sens de rotation de l'anneau cannelé (28) dudit engrenage de commande.

6. Une unité de synchronisation d'embrayage selon la revendication 5, caractérisée en ce que le moyeu (31) est pourvu, au fond de sa rainure (38) recevant la clavette, de portions (54) qui limitent le coulissement axial dudit élément clavette (39) à l'intérieur d'une plage prédéterminée quand la saillie (41) de l'élément clavette est hors de l'encoche annulaire (40) du manchon (33) et que l'élément clavette est enfoncé radialement par l'élément manchon dans ladite encoche recevant la clavette à l'intérieur du moyeu,

et en ce que la face terminale interne de chacune desdites encoches (50) dudit élément clavette qui est positionnée la plus près de l'anneau cannelé (28) respectif possède une surface inclinée (51) ayant une inclinaison telle que, quand ledit élément clavette est éloigné axialement de l'anneau cannelé et chacune desdites premières saillies (48) est logée dans chaque encoche de l'élément clavette, ladite surface inclinée pousse chacune desdites premières saillies afin de faire tourner chacun desdits anneaux synchroniseurs (35) en sens inverse du sens de l'anneau cannelé.

7. Une unité de synchronisation d'embrayage selon la revendication 6, caractérisée en ce que l'élément clavette (39) est configuré en forme de T comprenant une partie "de tige" descendante qui s'étend radialement depuis le milieu d'une partie axiale dudit élément clavette vers l'intérieur dudit moyeu (31), et une paire d'extensions axiales qui s'étendent vers ladite paire d'anneaux synchroniseurs (35), une paire de surfaces de poussée, destinées à pousser sélectivement les anneaux synchroniseurs (35), étant formées sur les faces terminales axiales de la partie "de tige", et la paire d'encoches (50) étant formées dans les surfaces internes de ladite paire d'extensions axiales.

8. Une unité de synchronisation d'embrayage selon l'une des revendications précédentes, caractérisée en ce que l'élément clavette (39) possède dans l'axe de symétrie de sa surface interne une rainure (44) et en ce que le moyeu (31) reçoit une broche de verrouillage (42) poussée radialement vers l'extérieur de façon élastique pour se loger dans la rainure, en position neutre du manchon (33), grâce à un ressort (43) disposé à l'intérieur dudit moyeu, ce ressort constituant le seul moyen de poussée destiné à pousser ledit élément clavette radialement vers l'extérieur dudit élément moyeu.

9. Une unité de synchronisation d'embrayage selon la revendication 6, caractérisée en ce que lesdits deux anneaux synchroniseurs (35) sont tirés l'un vers l'autre par un ressort de traction (58) qui s'étend à travers un passage axial (57), formé dans ledit moyeu (31) et accroché à ses deux extrémités auxdits anneaux synchroniseurs.

10. Une unité de synchronisation d'embrayage selon l'une quelconque des revendications de 1 à 8, caractérisée en ce que l'anneau synchroniseur ou chaque anneau synchroniseur (35) est poussé vers le moyeu (31) par un ressort de pression (158) qui est disposé entre l'engrenage de commande associé (26, 27) et l'anneau synchroniseur.

**Patentansprüche**

1. Kupplungssynchronisiereinheit, enthaltend: eine Transmissionswelle (22); ein Anthebszahnrad (26) mit einem angeformten Keilprofilring (28), das drehbar auf der Transmissionswelle (22) angebracht ist und bei dem der Keilprofilring (28) eine erste Innenkegelkupplungsfläche (29) aufweist; eine Nabe (31), die auf der Transmissionswelle (22) befestigt ist und eine erste Außenkeilprofilwelle (32) aufweist; eine axial verschiebbare Hülse (33) mit einem zweiten Innenkeilprofil (34), das mit dem Keilprofilring (28) in Eingriff bringbar ist, wobei die Hülse (33) infolge des Eingriffs des ersten und zweiten Keilprofils (32 und 34) verschiebbar, aber nicht drehbar auf der Nabe gelagert ist; einen Synchronring (35) mit einer zweiten Außenkegelkupplungsfläche (36), die mit der ersten Kupplungsfläche (29) in Reibungseingriff bringbar ist, und mit einem dritten Außenkeilprofil (37), das mit dem zweiten Keilprofil (34) in Eingriff bringbar ist, wobei die Nabe einen Endbereich (31a) verminderten Durchmessers aufweist, auf dem der Synchronring verschiebbar gelagert ist; und eine Paßfeder (39), die in einer Axialnut (38) am Außenumfang der Nabe gleiten und den Synchronring (35) über die erste und zweite Kupplungsfläche (29,36) in Reibeingriff mit dem Keilprofilring (28) schieben kann, wobei die Paßfeder (39) einen äußeren Vorsprung (41) aufweist, in einer ringförmigen Vertiefung (40) im Inneren der Hülse (33) aufgenommen werden kann und bezüglich der genannten Nabe radial nach außen vorgespannt ist, um mittels des Vorsprungs (41) nachgiebig in die genannte Hülse so einzugreifen, daß die Paßfeder (39) in Richtung Synchronring bewegt wird, wenn die Hülse aus ihrer Mittellage zum Keilprofilring (28) hin verschoben wird, gekennzeichnet durch Steuermittel (45,46,47; 45A,45B,46A,46B,47; 145A,145B,146A,146B), die zwischen gegenüberliegenden Stirnflächen des Synchronrings (35) und der Nabe (31) als Reaktion auf eine anfängliche Drehbewegung des Synchronrings (35) relativ zur Nabe (31) aufgrund eines anfänglichen Reibeingriffs zwischen den ersten und zweiten Kupplungsflächen (29,36) wirksam werden, um den Reibeingriff des Synchronrings mit der Nabe zu verstärken und den Synchronring in Richtung Keilprofilring (28) zu bewegen:
durch ein Sperrvorsprungsmittel (48,49), das am Außenumfang des genannten Synchronrings (35) vorgesehen ist, um in die Paßfeder (39) einzugreifen und so eine Drehbewegung des Synchronrings zu verhindern, wenn sich die Hülse (33) in ihrer Mittellage befindet, wohingegen, wenn die Paßfeder aus ihrer Mittellage zum Keilprofilring (28) hin um einen bestimmten kleinen Betrag verschoben wird, das Sperrvorsprungsmittel infolge einer Vertiefung (50) in der Paßfeder aus seinem Eingriff mit dieser gelöst wird und dann eine Drehbewegung des genannten Synchronrings ermöglicht; und
durch eine Rampenfläche (51; 51A,51B), die an einer inneren Endfläche der Vertiefung (50) der Paßfeder (39) ausgebildet und näher beim Keilprofilring (28) angeordnet ist, so daß, wenn die Paßfeder axial vom Keilprofilring (28) weg bewegt wird, während das Sperrvorsprungsmittel (48,49) innerhalb der Vertiefung (50) liegt, die Rampenfläche an das Sperrvorsprungsmittel stößt, so daß der Synchronring (35) in eine solche Richtung gedreht bzw. bewegt wird, daß das Sperrvorsprungsmittel aus der Vertiefung in der Paßfeder herausbewegt wird.

2. Kupplungssynchronisiereinheit nach Anspruch 1, dadurch gekennzeichnet, daß die Steuermittel ein Paar von in gegenüberliegenden Stirnflächen des Synchronrings (35) und der Nabe (31) ausgebildeten Steuernuten mit Rampenflächen (45,46) und eine Kugel zwischen den Rampenflächen (45,46) aufweist.

3. Kupplungssynchronisiereinheit nach Anspruch 1 oder 2, dadurch gekennzeichnet, daß das Sperrvorsprungsmittel am Synchronring einen ersten Vorsprung (48), der in der Mittellage die Paßfeder (39) in bezug auf die Drehrichtung des Keilprofilrings (28) von der stromauf liegenden Seite ergreift, und einen zweiten Vorsprung (49) enthält, der sich in der Mittellage auf der stromab liegenden Seite der Paßfeder befindet, und daß diejenige innere Endfläche der Vertiefung (50) der Paßfeder (39), die dem Keilprofilring (28) näher als die andere Endfläche (52) liegt, eine Rampenfläche (51) mit einer solchen Neigung aufweist, daß, wenn die Paßfeder in einem Zustand, bei dem sich der erste Vorsprung (48) in ihrer Vertiefung (50) befindet, axial vom Keilprofilring weg bewegt wird, die Rampenfläche gegen den ersten Vorsprung stößt und so den Synchronring (35) in die zur Drehrichtung des Keilprofilrings (28) entgegengesetzte Richtung dreht.

4. Kupplungssynchronisiereinheit nach Anspruch 1 oder 2, dadurch gekennzeichnet, daß die innere Endfläche der Vertiefung(en) (50) der Paßfeder (39) erste und zweite Rampenflächen (51A,51B) aufweist, wobei die erste Rampenfläche (51A) eine solche Neigung hat, daß, wenn die Paßfeder bei in ihrer Vertiefung (50) befindlichem Vorsprung (48) axial vom Keilprofilring (28) weg geschoben wird, die erste Rampenfläche so gegen den ersten Vorsprung stößt, daß sich der genannte Schronring (35) in eine zweite Richtung dreht, während die zweite Rampenfläche (51B) eine solche Neigung hat, daß, wenn die Paßfeder bei in ihrer Vertiefung (50) befindlichem zweiten Vorsprung (49) axial vom Kupplungszahnrad weg verschoben wird, die zweite Rampenfläche (51B) so gegen denz weiten Vorsprung stößt, daß sich der Synchronring in die erste Richtung dreht.

5. Kupplungssynchronisiereinheit nach den Ansprüchen 3 oder 4, bei dem die Einheit zwei im axialen Abstand drehbar auf der Transmissionswelle gelagerte Antriebszahnräder aufweist und einen Synchronring (35) für jedes Antriebszahnrad enthält, wobei jedes Antriebszahnrad einen angeformten Keilprofilring (28) mit einer Innenkegelfläche hat, dadurch gekennzeichnet, daß jeder der Synchronringe (35) an seinem Außenumfang einen ersten Vorsprung (48), der in der Mittellage der Hülse (33) in bezug auf die Drehrichtung des Keilprofilrings (28) von der stromauf liegenden Seite her an der Paßfeder (39) anliegt, und einen zweiten Vorsprung (49) aufweist, der in der Mittellage der Hülse (33) auf der stromab liegenden Seite an der Paßfeder anliegt, wobei der erste und zweite Vorsprung des Synchronringpaares in der Weise angeordnet sind, daß selbst für den Fall, daß die Paßfeder (39) an einer Seite in ihrer dem Keilprofilring (28) nahesten Stellung positioniert ist, ein Endabschnitt der Paßfeder an der anderen Seite noch zwischen dem ersten und zweiten Vorsprung des Synchronrings liegt, während ein Paar von Vertiefungen (50) in einer inneren Oberfläche der Paßfeder in einem solchen axialen Abstand angeordnet ist, daß, wenn diese Paßfeder aus ihrer Mittellage um einen bestimmten kleinen Betrag zu einem Keilprofilring (28) hin verschoben wird, jede dieser Vertiefungen jeden dieser ersten Vorsprünge frei gibt und so eine Drehbewegung jedes Synchronrings in der Drehrichtung des Keilprofilrings (28) des genannten Kupplungszahnrades ermöglicht.

6. Kupplungssynchronisiereinheit nach Anspruch 5, dadurch gekennzeichnet, daß die Nabe (31) am Grund ihrer Paßfeder-Aufnahmenut (38) mit Abschnitten (54) versehen ist, die die Axialbewegung der Paßfeder (39) auf einen bestimmten Bereich begrenzen, wenn der Vorsprung (41) der Paßfeder außerhalb der ringförmigen Vertiefung (40) der Hülse (33) ist und die Paßfeder innerhalb der Paßfeder-Aufnahmenut durch die Hülse radial ins Innere der Nabe gedrückt wird, und daß die innere Endfläche jeder der Vertiefungen (50) der Paßfeder, die dem entsprechenden Keilprofilring (28) näher liegt, eine Rampenfläche (51) mit einer solchen Neigung aufweist, daß, wenn die Paßfeder, während sich jeder der ersten Vorsprünge (48) in ihrer jeweiligen Vertiefung befindet, axial vom Keilprofilring weg bewegt wird, diese Rampenfläche so gegen jeden ersten Vorsprung stößt, daß jeder der Synchronringe (35) in zur Richtung des Keilprofilrings entgegengesetzte Richtung dreht.

7. Kupplungssynchronisiereinheit nach Anspruch 6, dadurch gekennzeichnet, daß die Paßfeder (39) eine T-Form mit einem herabhängenden, beinartigen Abschnitt, der sich von einem axialen Mittelteil der genannten Paßfeder radial in die genannte Nabe (31) erstreckt, und einem Paar von axialen Fortsätzen aufweist, die sich zu dem Paar der genannten Synchronringe (35) hin erstrecken, wobei an den axialen Endflächen des beinartigen Abschnitts ein Paar von Schubflächen (59) angeformt sind, um die Synchronringe (35) selektiv anzustoßen, und wobei das Paar von Vertiefungen (50) in Innenflächen des Paars von axialen Fortsätzen ausgebildet ist.

8. Kupplungssynchronisiereinheit nach einem der vorhergehenden Ansprüche, dadurch gekennzeichnet, daß die Paßfeder (39) in einem axialen Mittelbereich einer Innenfläche eine Kerbe (44) aufweist, in die in der Mittellage der Hülse (33) ein durch eine Feder (43) in der genannten Nabe nach außen elastisch vorgespannter Verriegelungsstift (42) eingreift, wobei die Feder das einzige Vorspannmittel bildet, das die Paßfeder bezüglich der genannten Nabe radial nach außen vorspannt.

9. Kupplungssynchronisiereinheit nach Anspruch 6, dadurch gekennzeichnet, daß das genannte Paar von Synchronringen (35) durch eine Zugfeder (58) gegeneinander vorgespannt ist, die sich durch ein axiales Durchgangsloch (57) in der Nabe (31) erstreckt und mit ihren beiden Enden in die Syncronringe eingehakt ist.

10. Kupplungssynchronisiereinheit nach einem der Ansprüche 1 bis 8, dadurch gekennzeichnet, daß der oder die Synchronringe (35) durch eine Druckfeder (158), die sich zwischen dem zugehörigen Antriebszahnrad (26,27) und dem Synchronring befindet, in Richtung der Nabe (31) vorgespannt ist (sind).

FIG. 1.

FIG.2.

FIG.3.

F I G .4.

F I G .6.

F I G .5.

F I G .7.

F I G .8.

F I G .9.

FIG.10(a).

FIG.10(b).

FIG.10(c).

FIG.10(d).

FIG.10(e).

FIG.10(f).

FIG.10(g).

FIG.10(h).

EP 0 319 233 B1

FIG.10(i)          FIG.10(j)          FIG.10(k)

EP 0 319 233 B1

F I G .12.

F I G .11A.

F I G .11B.

EP 0 319 233 B1

FIG.13(a). FIG.13(b). FIG.13(c).

FIG.13(f).          FIG.13(e).          FIG.13(d).

EP 0 319 233 B1

FIG.13(g).    FIG.13(h).

# FIG.13(i).     FIG.13(j).     FIG.13(k).

EP 0 319 233 B1

FIG.14(b).

FIG.14(c).

FIG.14(d).

FIG.14(e).

FIG.14(f).

FIG.14(g).

FIG.14(h).

FIG.14(i).

FIG.14(j).

FIG.15.

(a) (b) (c)

FIG.16.

(a) (b) (c)

FIG.14(k).

F I G .17.